# EUROPÄISCHE PATENTSCHRIFT

(11) **EP 3 753 086 B1**
(45) Veröffentlichungstag und Bekanntmachung des Hinweises auf die Patenterteilung: **29.12.2021**
(21) Anmeldenummer: 19701635.5
(22) Anmeldetag: 23.01.2019
(51) Int. Cl.: H02J 3/48

(54) **VERFAHREN ZUR LEISTUNGSREGELUNG IN EINEM UNTERWASSERFAHRZEUG UND UNTERWASSERFAHRZEUG**
METHOD FOR POWER REGULATION IN AN UNDERWATER VEHICLE AND UNDERWATER VEHICLE
PROCÉDÉ DE RÉGULATION DE PUISSANCE DANS UN ENGIN SOUS-MARIN ET ENGIN SOUS-MARIN

(30) Priorität: 15.02.2018 DE 102018202338
(43) Veröffentlichungstag der Anmeldung: 23.12.2020
(73) Patentinhaber: thyssenkrupp Marine Systems GmbH, 24143 Kiel (DE); thyssenkrupp AG, 45143 Essen (DE)
(72) Erfinder: DANNENBERG, Norbert, 23628 Krummesse (DE); ROTH, André, 24119 Kronshagen (DE)
(74) Vertreter: thyssenkrupp Intellectual Property GmbH
(86) Internationale Anmeldenummer: PCT/EP2019/051655
(87) Internationale Veröffentlichungsnummer: WO 2019/158332

(56) Entgegenhaltungen:
- EP-A2- 2 090 508
- WO-A2-2008/028203
- US-A1- 2010 019 729
- US-A1- 2017 126 018

## Beschreibung

Die Erfindung betrifft ein Verfahren zur Leistungsregelung in einem elektrischen Netz an Bord eines Unterwasserfahrzeugs sowie ein Unterwasserfahrzeug, welches ein solches Netz umfasst und zur Durchführung eines solchen Verfahrens ausgestaltet ist.

Ein elektrisches Netz an Bord eines Unterwasserfahrzeugs, beispielsweise eines bemannten Unterseeboots (U-Boots), besitzt eine Vielzahl von elektrischen Verbrauchern, die in der Regel teils mit Gleichstrom und teils mit Wechselstrom gespeist werden. Die elektrische Energie wird von mindestens zwei parallel angeordneten Spannungsquellen bereitgestellt. Wenigstens einige der Verbraucher werden gleichzeitig von beiden Spannungsquellen gespeist. Diese Verbraucher sind mit jeweils zwei Umrichtern verbunden, welche den Strom von beiden Spannungsquellen in den Strom, welche der Verbraucher verbraucht, wandelt. In der Regel ist jede Spannungsquelle so ausgestaltet, dass sie beim Ausfall der oder jeder anderen Spannungsquelle allein für einige Zeit alle oder wenigstens die betriebsnotwendigen Verbraucher versorgen kann.

Oft umfasst jede Spannungsquelle jeweils eine Batterie. Im Betrieb kann die eine Batterie stärker entladen sein als die andere Batterie. Bekannt ist folgendes Vorgehen, um diese unterschiedlichen Ladezustände der beiden Batterien auszugleichen: Die stärker entladene Batterie wird zeitweise von einem Verbraucher getrennt, so dass die andere Batterie alleine diesen Verbraucher versorgt und daher stärker entladen wird.

In DE 102014109092 A1 wird ein Unterseeboot mit einem elektrischen Antrieb 3 für einen Propeller und mit einem elektrischen Netz zur Versorgung dieses Antriebs 3 beschrieben. Ein Generator 4, eine Brennstoffzelle 5 sowie mehrere Batteriestränge 7 mit jeweils mehreren Batteriemodulen 8 vermögen Strom in das Netz einzuspeisen. Jeder Batteriestrang 7 ist über eine eigene Stranganbindungseinheit 10 mit einem Spannungswandler 11 und einer Schalteinrichtung 12 mit dem Netz verbunden. Jede Stranganbindungseinheit 10 besitzt eine eigene Strangsteuereinheit 14, welche über eine Sensorik 13 die jeweilige Spannung an den einzelnen Batteriemodulen 8 zu messen vermag. Eine zentrale Antriebssteuereinheit 15 ist mit den einzelnen Strangsteuereinheiten 14 verbunden und vermag jeden Batteriestrang 7 zuzuschalten und abzuschalten.

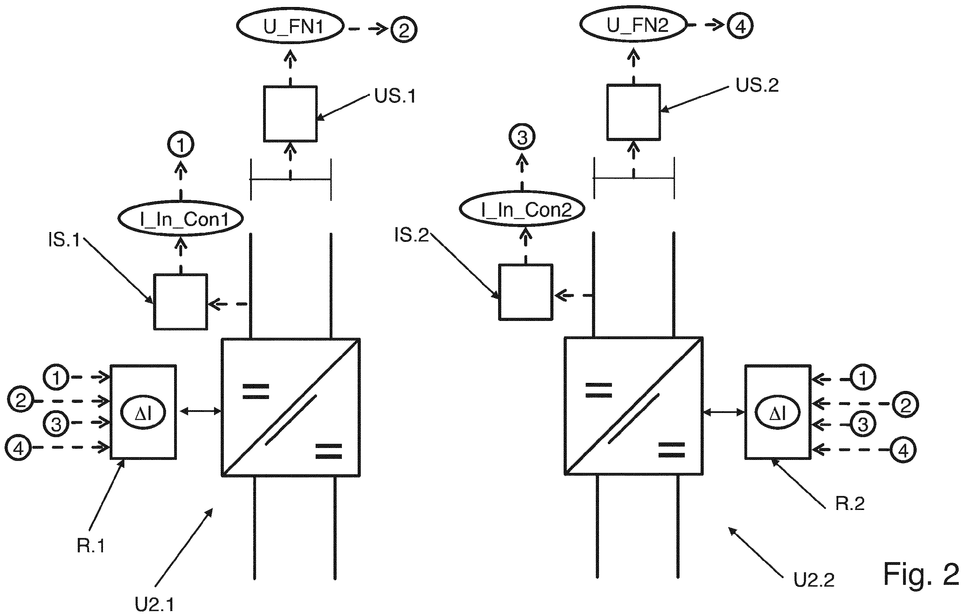

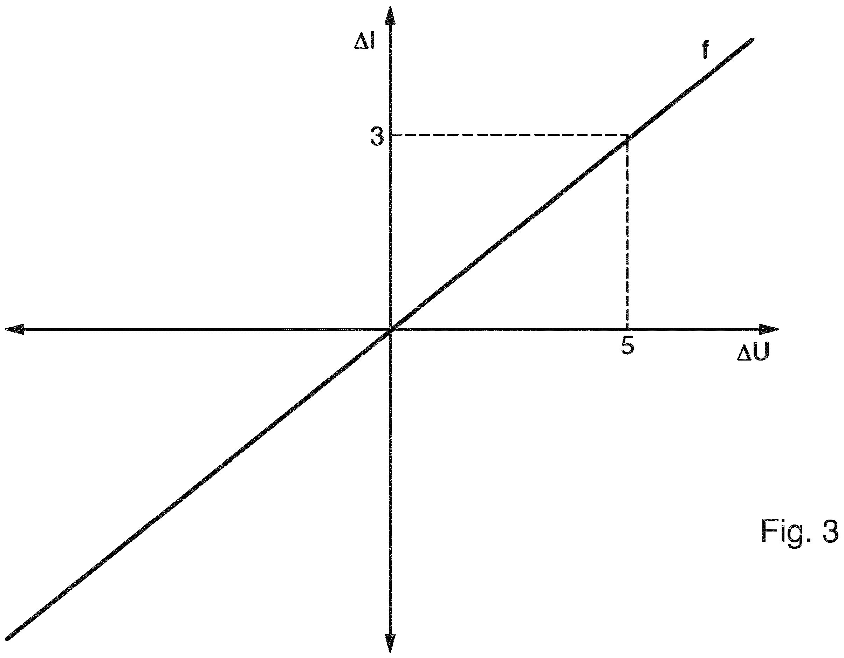

Fig. 2 von DE 102012201605 A1 zeigt ein Batteriesystem 100 mit mehreren parallelen Batteriesträngen 20. Jeder Batteriestrang 20 besitzt mehrere in Reihe geschaltete Batteriezellen 30 und ist an den Eingang 41 eines zugeordneten DC/DC-Wandlers 40 angeschlossen. Die Ausgänge 42 der parallel geschalteten DC/DC-Wandler 40 sind mit demselben Anschluss 11 einer Batterie 10 verbunden, die Ausgänge 43 mit Masse 50. Die Ströme I1, I2, welche durch die Batteriestränge 20 fließen, lassen sich individuell regeln. In einer Ausführungsform ist ein DC/DC-Wandler 40 als ein Buck-Konverter (Abwärtswandler) ausgestaltet und lässt sich mit Hilfe eines Schalters 44 wahlweise mit dem Batteriestrang 20 verbinden oder vom Batteriestrang 20 trennen, vgl. Fig. 3. Vorzugsweise werden die Ströme so eingestellt, dass in einer vorbestimmten Zeit ein Ladungsausgleich zwischen den Batteriesträngen 20 erfolgt. Batteriestränge 20, die eine größere Leistungsfähigkeit aufweisen, können mittels größerer Ströme schneller als Batteriestränge mit einer kleineren Leistungsfähigkeit entladen werden. Dadurch wird ein aktiver Ladungsausgleich (Balancing) zwischen den unterschiedlich geladenen Batteriesträngen bereitgestellt.

Fig. 1 und Fig. 2 von DE 102009054820 A1 zeigen ein Energieversorgungssystem 10 mit zwei Speichermodulen 38, 40 mit jeweils einer Vielzahl von Speicherzellen 60, einem Energieüberträger 14 mit zwei Gleichstromstellern (DC/DC-Umrichter 26, 28), einem Wechselrichter 18 und einer als Drehstrommaschine ausgebildeten elektrischen Maschine 58, welche von dem Energieversorgungssystem 10 versorgt wird. Fig. 3 von DE 102009054820 A1 zeigt eine elektrische Schaltung mit folgenden Bestandteilen: ein Speichermodul 38 oder 40, einen Gleichstromsteller (DC/DC-Umrichter 26, 28), eine Ermittlungsvorrichtung 64 mit einer Recheneinrichtung 68 umfassend zwei Auswertemittel 70, 72 und eine Ansteuervorrichtung 66.

Das erste Auswertemittel 70 umfasst ein Modell eines Speichermoduls 38, 40 und liefert eine Modellspannung U_m. Die Recheneinrichtung 68 vergleicht die Modellspannung mit der gemessenen tatsächlichen Modulspannung U_b und berechnet abhängig vom Ergebnis des Vergleichs sowie des Modulstroms I_b und der Modultemperatur T_b eine Zustandsgröße des Speichermoduls 38, 40. Das zweite Auswertemittel 72 erhält die Modellparameter und die Zustandsgröße und generiert eine Vorhersage des Zustands und / oder des Verhaltens des zugeordneten Speichermoduls 38, 40. Bei einem leistungsorientierten Betrieb können die Speichermodule 38, 40 in Abhängigkeit von der aktuellen Leistungsanforderung und dem Leistungs-Energieverhältnis der eingesetzten Zellen unterschiedlich stark an den Lade- und Entlade-Vorgängen beteiligt werden, vgl. Par. [0034]. Bei einer anderen Betriebsweise wird ein gleichmäßiger mittlerer Ladezustand der Speichermodule erzielt. Falls ein Speichermodul 38, 40 einen höheren Ladezustand aufweist als das andere Speichermodul, so wird es zeitweise stärker an Vorgängen beteiligt, bei denen den Speichermodulen 38, 40 Ladung entnommen wird, und / oder weniger stark an Vorgängen beteiligt, bei denen den Speichermodulen 38, 40 Ladung zugeführt wird, vgl. Par. [0037].

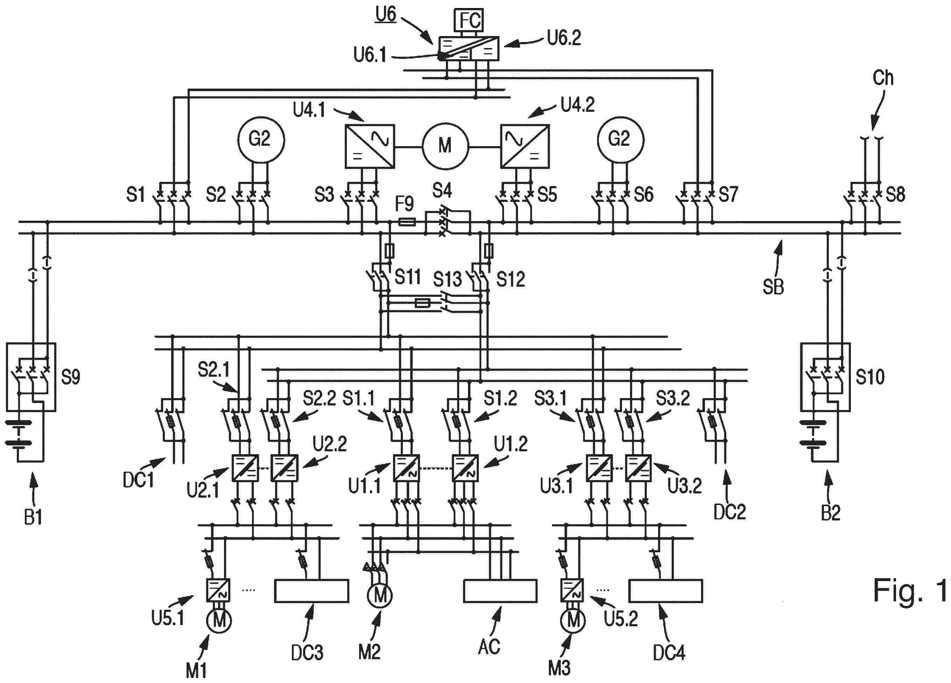

Fig. 1 von EP 2985857 A1 zeigt ein Speicherbatteriesystem 1 mit zwei parallelen Speicherbatterien 10 und 20, die mit jeweils einem bidirektionalen Umrichter (DC/DC converter) 12, 22 verbunden sind. Jeder Umrichter vermag eine Spannung abhängig von einem anliegenden Pulsweitenmodulations-Signal zu verändern. Bei einem Verfahren, welches in Fig. 9 gezeigt wird, entdeckt jeweils ein Spannungs-Sensor die Spannung an einer Batterie 10, 20, vgl. Pars. [0082], [0088], [0089] und [0090]. Außerdem vermag ein Stromstärken-Sensor 14, 24 den Stromfluss zwischen einer Batterie 10, 20 und einem Umrichter 12, 22 zu messen, vgl. Fig. 1. Jeder Batterie 10, 20 wird ein Sollwert für die Stromstärke (total current command value) vorgegeben. Ein Regler (controller 3) berechnet jeweils einen Sollwert für die Eingangs-Stromstärke (input current command value) an einem Umrichter 12, 22, vgl. Par. [0044]. Falls die Spannungen voneinander abweichen (Ausgang Yes von Schritt S55), so wird die Sollgröße für die gesamte Stromstärke (total current command value) proportional, also abhängig vom Verhältnis der beiden Spannungen, auf die beiden Umrichter 12, 22 für die beiden Batterien 10, 20 verteilt, so dass einem Umrichter für eine Batterie mit geringerer Ausgangsspannung eine geringere Soll-Stromstärke vorgegeben wird und diese Batterie mit relativ geringem Entladestrom entladen wird (Schritt S56). Dadurch wird ein ungleicher Ladezustand (imbalance of the two storage battery voltages) ausgeglichen (resolved).

Auch in DE 102015216097 A1 wird ein Verfahren beschrieben, um an Bord eines Unterseeboots die Leistungsabgabe von zwei parallelen Spannungsquellen mit Hilfe von zwei parallelen Umrichtern zu regeln.

WO 2008/028203 A2 offenbart ein Verfahren zur Regelung der Lastverteilung in einem elektrischen Netz mit zwei parallel angeordneten Spannungsquellen, welches kein Unterwasserfahrzeug ist.

Aufgabe der Erfindung ist es, ein Verfahren zur Leistungsregelung mit den Merkmalen des Oberbegriffs des Anspruchs 1 in einem elektrischen Netz eines Unterwasserfahrzeugs und ein Unterwasserfahrzeug mit den Merkmalen des Oberbegriffs des Anspruchs 15 bereitzustellen, bei denen unterschiedliche Leistungsabgaben der beiden Spannungsquellen mit geringerem Leistungsverlust automatisch kompensiert werden als bei bekannten Verfahren und Unterwasserfahrzeugen.

Gelöst wird diese Aufgabe durch ein Verfahren mit den in Anspruch 1 angegebenen Merkmalen und ein Unterwasserfahrzeug mit den in Anspruch 15 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren wird an Bord eines Unterwasserfahrzeugs mit einem elektrischen Netz durchgeführt. Dieses Netz umfasst
- wenigstens zwei parallel angeordnete Spannungsquellen,
- wenigstens einen elektrischen Verbraucher sowie
- für den oder mindestens einen Verbraucher mindestens zwei parallel angeordnete Umrichter.

"Der Verbraucher", der mit den beiden Umrichtern verbunden ist, kann eine Menge von einzelnen Verbrauchern sein, wobei jeder einzelne Verbraucher mit beiden Umrichtern verbunden ist.

Wenigstens in einem Normalbetrieb ist folgende Situation hergestellt: Der Verbraucher ist über jeweils einen Umrichter mit jeder Spannungsquelle verbunden, ist insgesamt also über zwei parallele Umrichter mit den beiden oder mit wenigstens zwei Spannungsquellen verbunden. Jeder Umrichter ist dabei mit der einen Spannungsquelle verbunden und von der oder jeder anderen Spannungsquelle getrennt. Jede Spannungsquelle ist im Normalbetrieb zu jedem Zeitpunkt über jeweils einen Umrichter mit dem Verbraucher verbunden. Somit lässt sich der Verbraucher gleichzeitig von beiden Spannungsquellen mit elektrischer Energie versorgen.

Jeder Umrichter ist lösungsgemäß mit jeweils einer Spannungsquelle verbunden und wenigstens im Normalbetrieb von der oder jeder anderen Spannungsquelle getrennt. Möglich ist, dass ein Umrichter während des Normalbetriebs in einem ersten Zeitraum mit einer ersten Spannungsquelle verbunden ist und von den anderen Spannungsquellen getrennt ist und in einem zweiten Zeitraum mit einer zweiten Spannungsquelle verbunden ist und von den anderen Spannungsquellen getrennt ist.

Jeder Umrichter wandelt Strom von derjenigen Spannungsquelle, die mit diesem Umrichter verbunden ist, in Strom für den Verbraucher. Der Verbraucher ist mit beiden Umrichtern verbunden und verbraucht Strom, der von den beiden Umrichtern geliefert wird.

Jede Spannungsquelle gibt also elektrische Leistung ab, die vom Verbraucher verbraucht wird. Ein Unterschied in den Leistungsabgaben der beiden Spannungsquellen wird automatisch kompensiert. Zur automatischen Kompensation wird mindestens einmal eine Abfolge durchgeführt, welche die folgenden Schritte umfasst:
- Die jeweilige Eingangs-Spannung, die an jedem der beiden parallel angeordneten Umrichter anliegt, wird gemessen. Die eine gemessene Eingangs-Spannung wird von der einen Spannungsquelle bewirkt, die andere Eingangs-Spannung von der anderen Spannungsquelle.
- Ein Spannungen-Differenz-Wert wird berechnet. Dieser Wert ist die Differenz zwischen den beiden gemessenen Werten der Eingangs-Spannungen an den beiden Umrichtern.
- Abhängig von dem berechneten Spannungen-Differenz-Wert wird ein Leistungen-Sollwert berechnet. Dieser Sollwert ist die Differenz zwischen zwei Maßen, welche die beiden elektrischen Leistungen angeben, welche die beiden Umrichter von der jeweils verbundenen Spannungsquelle aufnehmen oder jeweils an den verbundenen Verbraucher abgegeben.
- Jeweils ein Maß für die elektrischen Leistungen, welche die beiden Umrichter tatsächlich aufnehmen oder tatsächlich abgeben, wird gemessen.
- Die beiden Umrichter werden mit dem Ziel angesteuert, dass die Differenz zwischen den Werten der tatsächlich aufgenommenen oder abgegebenen Leistungen gleich dem berechneten Leistungen-Sollwert ist. Für die Ansteuerung der beiden Umrichter werden die beiden gemessenen Werte für die tatsächlich aufgenommenen oder abgegebenen Leistungen verwendet.

Jeder Umrichter gleicht Schwankungen in der Eingangs-Spannung von der mit diesem Umrichter verbundenen Spannungsquelle aus. Im laufenden Betrieb kann aber darüber hinaus die Situation auftreten, dass die eine Spannungsquelle weniger Leistung abgibt als die andere Spannungsquelle. Dies kann insbesondere dann auftreten, wenn mindestens ein weiterer Verbraucher des elektrischen Netzes nur mit einer Spannungsquelle verbunden ist und daher nur eine Spannungsquelle belastet. Außerdem kann die eine Spannungsquelle anderen plötzlichen oder allmählich wirkenden Umgebungseinflüssen ausgesetzt sein und / oder stärker altern als die andere Spannungsquelle. Diese Unterschiede führen zu unterschiedlichen Ladezuständen in den Spannungsquellen. Unterschiedliche Ladezustände in den Spannungsquellen sind aber insbesondere deshalb unerwünscht, weil bei Ausfall oder Störung in einem Teil des Netzes der noch betriebsbereite Rest des Netzes betriebsbereit bleiben muss. Das lösungsgemäße Verfahren kompensiert diesen Unterschied in den Leistungen, welche die beiden Spannungsquellen abgeben.

Lösungsgemäß wird abhängig von der Differenz zwischen den beiden gemessenen Werten für die beiden Eingangs-Spannungen ein Leistungen-Sollwert für die Differenz zwischen den beiden aufgenommenen oder abgegebenen Leistungen hergeleitet, und die beiden Umrichter werden mit dem Ziel angesteuert, dass die Differenz zwischen den beiden tatsächlich aufgenommenen oder abgegebenen Leistungen gleich diesem vorgegebenen Leistungen-Sollwert ist. Dadurch wird ermöglicht, dass die Auswirkungen von unterschiedlichen Zuständen der beiden Spannungsquellen und damit unterschiedlichen Leistungsabgaben von den beiden Spannungsquellen wenigstens annähernd automatisch kompensiert werden, nämlich dadurch, dass die Spannungsquelle mit der höheren Spannung eine höhere Leistung an den verbundenen Umrichter und damit an den Verbraucher liefert als die Spannungsquelle mit der niedrigeren Spannung. Der Unterschied zwischen den beiden Zuständen und damit Leistungsabgaben wird dadurch verringert. Diese Verringerung lässt sich vollautomatisch durchführen und erfordert keinen Stelleingriff eines Benutzers. Natürlich ist es weiterhin möglich, dass ein Benutzer einen Stelleingriff vornimmt.

Das Verfahren ermöglicht, aber erfordert nicht, dass eine Spannungsquelle mit geringerer Spannung zeitweise ganz von dem oder einem Verbraucher getrennt wird, um die Spannungen auszugleichen. Vielmehr wird zeitweise die Spannungsquelle mit geringerer Spannung lediglich weniger belastet und dadurch weniger entladen als die andere Spannungsquelle. Der Verbraucher bleibt wenigstens im Normalbetrieb mit beiden Spannungsquellen verbunden. Die Erfindung vermeidet die Notwendigkeit, zur Kompensation der unterschiedlichen Leistungsabgaben mehrere Schaltelemente, beispielsweise Dioden, vorzusehen, welche den Verbraucher zeitweise von einer Spannungsquelle trennen können. Dadurch wird ein Abschalten und späteres erneutes Einschalten dieser Schaltelemente vermieden. An solchen Schaltelementen können Verlustleistungen und damit Verlustwärme auftreten. Gerade in einem Unterwasserfahrzeug ist es oft schwierig, solche entstehende Wärme abzuführen. Insbesondere deshalb ist es von Vorteil, wenigstens im Normalbetrieb keine solchen Schaltelemente zu benötigen.

Je größer der Unterschied zwischen den gemessenen Spannungen ist, desto größer ist auch der Unterschied zwischen den entnommenen Leistungen. Dank der Erfindung wird eine Art Regelung mit dem Regelungsziel, den Unterschied in den Betriebszuständen und damit Spannungen rasch zu beseitigen, durchgeführt. Das Verfahren läuft vollautomatisch ab und erfordert keinen Eingriff eines Benutzers. Selbstverständlich kann ein Benutzer das automatische Verfahren durch einen Benutzereingriff überschreiben.

Die Erfindung sieht vor, Eingangs-Spannungen an den Umrichtern sowie die Leistungen, die die Umrichter aufnehmen oder abgeben, zu messen. Daher ist es möglich, aber dank der Erfindung nicht erforderlich, eine Spannung direkt an der Spannungsquelle oder eine Leistungsaufnahme direkt an dem Verbraucher zu messen. Weiterhin ist es nicht erforderlich, Messwerte über eine größere Entfernung zu übermitteln. Vielmehr wird eine lokale Regelung der beiden parallelen Umrichter ermöglicht.

Die Erfindung lässt sich oft rasch an Bord eines bereits in Betrieb genommenen Unterwasserfahrzeugs implementieren. Das Netz mit seinen Bestandteilen ist oft bereits vorhanden, und der oder die Regler zum Ansteuerung der Umrichter sind ebenfalls bereits implementiert. Oft sind keine mechanischen Umbauten erforderlich. Vielmehr reicht es aus, die Software abzuändern, die in dem Regler oder in den Reglern für die Umrichter abläuft.

In einer bevorzugten Ausführungsform der Erfindung wird der Leistungen-Sollwert dergestalt berechnet und vorgegeben, dass folgende Bedingungen erfüllt sind: Der berechnete Leistungen-Differenz-Sollwert ist umso größer, je größer der Spannungen-Differenz-Wert ist. Der berechnete Sollwert ist umso kleiner, je kleiner der Spannungen-Differenz-Wert ist. Diese Ausgestaltung bewirkt eine besonders rasche Kompensation der unterschiedlichen Leistungsabgaben von der Spannungsquelle, weil einer starken Differenz in den Leistungsabgaben stärker entgegen gesteuert wird als einer nur geringen Differenz.

In einer Ausgestaltung werden die beiden Umrichter so angesteuert, dass die gerade genannten beiden Bedingungen den Sollwert betreffend nur dann erfüllt sind, wenn der Spannungen-Differenz-Wert außerhalb eines vorgegebenen Toleranzbereichs liegt. Bevorzugt wird als Sollwert Null vorgegeben, solange der Spannungen-Differenz-Wert innerhalb dieses Toleranzbereichs liegt. Diese Ausgestaltung vermeidet die Notwendigkeit, die beiden parallelen Umrichter häufig ansteuern zu müssen. Vielmehr werden sie nur angesteuert, wenn die Spannungen sich um mehr als die Toleranz unterscheiden.

Lösungsgemäß wird ein Maß für die elektrische Leistung, die ein Umrichter aufnimmt oder abgibt, gemessen. Unterschiedliche Ausgestaltungen sind möglich, welches Maß für diese Leistung verwendet wird. In einer Ausgestaltung wird die Stromstärke an dem oder einem Eingang des Umrichters gemessen, wobei dieser Eingang mit einer Spannungsquelle verbunden ist. In einer anderen Ausgestaltung wird die Stromstärke an dem oder einem Ausgang des Umrichters gemessen, wobei dieser Ausgang mit dem Verbraucher verbunden ist. Möglich ist auch, die Stromstärke oder ein anderes Maß für die Leistung an dem oder einem Eingang des Verbrauchers zu messen, wobei dieser Eingang mit dem Umrichter verbunden ist. Das lösungsgemäße Verfahren lässt sich mit jedem Maß, das sich für die aufgenommene oder abgegebene elektrische Leistung verwenden lässt, durchführen.

In einer Ausgestaltung besitzt jeder Umrichter jeweils einen lokalen Regler. Jeder lokale Regler eines Umrichters erhält den gemessenen Wert für die Eingangs-Spannung und den gemessenen Wert für die tatsächlich aufgenommene oder abgegebene Leistung an diesem Umrichter sowie die beiden entsprechenden Werte an dem anderen, also dem parallel geschalteten Umrichter. Jeder lokale Umrichter führt die lösungsgemäße Abfolge zum Kompensieren unterschiedlicher Leistungsabgaben durch und steuert den zugeordneten Umrichter entsprechend an.

Die Ausgestaltung mit zwei lokalen Reglern vermeidet die Notwendigkeit, Signale an einen übergeordneten Regler zu übermitteln. Die Verfügbarkeit wird - im Vergleich zu einer Ausgestaltung mit einem übergeordneten Regler - gesteigert, weil beim Ausfall eines lokalen Reglers noch der andere lokale Regler zur Verfügung steht und weil es nicht erforderlich ist, Signale an einen oder von einem übergeordneten Regler zu übermitteln, was in der Regel eine Datenübermittlung über eine längere Strecke erfordert. Möglich ist, einen Umrichter mitsamt dem lokalen Regler als ein kompaktes Bauteil auszuführen, welches sich rasch einbauen und bei Bedarf austauschen lässt.

In einer anderen Ausgestaltung regelt ein übergeordneter Regler beide parallele Umrichter. An diesen übergeordneten Regler werden die beiden gemessenen Werte für die Eingangs-Spannungen und die beiden gemessenen Werte für die tatsächlich aufgenommenen oder abgegebenen Leistungen übermittelt. Der übergeordnete Regler führt die lösungsgemäße Abfolge durch und steuert beide Umrichter abhängig von dem berechneten Sollwert an. Diese Ausgestaltung reduziert die Gefahr, dass die beiden Umrichter in ungewollter Weise unterschiedlich arbeiten oder die aufgenommenen oder abgegebenen Leistungen stärker als erforderlich oszillieren.

In einer bevorzugten Ausgestaltung liefert jede Spannungsquelle Gleichstrom. Beispielsweise umfasst jede Spannungsquelle jeweils eine Batterie und / oder eine Brennstoffzelle. Jeder der beiden parallel angeordneten Umrichter kann in einer Ausgestaltung Gleichstrom einer Spannung in Gleichstrom einer anderen Spannung umwandeln, ist also ein Konverter. Möglich ist auch, dass die beiden Umrichter Gleichstrom von den Spannungsquellen in Wechselstrom umwandeln, also zwei Inverter sind. Das lösungsgemäße Verfahren lässt sich für beide Arten von Umrichtern verwenden.

Vorzugsweise wird das Verfahren wiederholt durchgeführt, beispielsweise mit einer vorgegebenen Abtastrate. Oder die beiden Eingangs-Spannungen werden wiederholt, beispielsweise mit einer vorgegebenen Abtastrate, gemessen, und der Spannungen-Differenz-Wert wird jedes Mal erneut berechnet. Nur dann, wenn der Spannungen-Differenz-Wert außerhalb eines vorgegebenen Toleranzbandes liegt, werden die weiteren Schritte der lösungsgemäßen Abfolge zum Kompensieren durchgeführt. In einer weiteren Ausgestaltung werden ebenfalls die beiden Eingangs-Spannungen wiederholt, beispielsweise mit einer vorgegebenen Abtastrate, gemessen. Falls mindestens ein Wert einer Eingangs-Spannung von dem zuvor gemessenen Wert dieser Eingangs-Spannung um mehr als eine vorgegebene Schranke abweicht, so werden die Schritte der lösungsgemäßen Abfolge zum Kompensieren durchgeführt, ansonsten nicht. Diese Ausgestaltungen vermeiden die Notwendigkeit, die Umrichter ständig ansteuern zu müssen.

In einer Ausgestaltung ist der oder ein Verbraucher, der mit zwei parallel geschalteten Umrichtern verbunden ist, ein elektrisch versorgter Motor. Der Motor ist beispielsweise ein Elektromotor, der das Unterwasserfahrzeug antreibt, oder ein elektrischer Stellmotor, der einen Bestandteil des Unterwasserfahrzeugs bewegt. Dieser Motor besitzt zwei parallel angeordnete Motor-Bestandteile, die unabhängig voneinander mit Strom versorgt werden, beispielsweise zwei Mengen von Wicklungen. Jeder Umrichter ist mit jeweils einem Bestandteil des Motors elektrisch verbunden. Diese Ausgestaltung ermöglicht es, unterschiedliche Leistungsabgaben der beiden Spannungsquellen auch im Falle eines Motors als Verbraucher zu kompensieren. Die Ausgestaltung erleichtert es, jeden Bestandteil des Motors mit der jeweils benötigten Menge an elektrischer Energie oder Leistung zu versorgen. Gerade ein Antriebsmotor oder Stellmotor belastet die beiden Spannungsquellen stärker als andere Verbraucher.

Lösungsgemäß umfasst das Netz zwei Spannungsquellen. In einer Ausgestaltung umfasst das Netz einen ersten, einen zweiten und einen dritten Spannungs-Lieferanten sowie zusätzlich zu den mindestens zwei parallelen Umrichtern einen weiteren Umrichter. Die ersten beiden Spannungs-Lieferanten sind gleichartig, sind beispielsweise zwei gleichartige Batteriesysteme. Der dritte Spannungs-Lieferant unterscheidet sich von den beiden ersten Spannungs-Lieferanten, ist beispielsweise eine Brennstoffzellenanlage. Der erste und der dritte Spannungs-Lieferant bilden zusammen die erste Spannungsquelle, der zweite und der dritte Spannungs-Lieferant zusammen die zweite Spannungsquelle. Ein Eingang des weiteren Umrichters ist mit dem dritten Spannungs-Lieferanten verbunden. Zwei parallele Ausgänge des weiteren Umrichters sind parallel zu dem ersten bzw. dem zweiten Spannungs-Lieferanten geschaltet und bevorzugt ebenfalls elektrisch mit dem Verbraucher verbunden. Unterschiedliche Leistungsabgaben der beiden gleichartigen Spannungs-Lieferanten werden gemäß dieser Ausgestaltung wie folgt automatisch kompensiert:
- Die jeweilige Ausgangs-Spannung an jedem der beiden parallel angeordneten Ausgänge des weiteren Umrichters wird gemessen.
- Der Spannungen-Differenz-Wert wird als Differenz zwischen den beiden gemessenen Werten der Ausgangs-Spannung berechnet.
- Ein Sollwert für die Differenz zwischen den beiden elektrischen Leistungen wird berechnet. Dieser Sollwert legt die Differenz zwischen den beiden elektrischen Leistungen, welche der weitere Umrichter an seinen beiden Ausgängen jeweils abgibt, fest. Der Sollwert wird abhängig von dem berechneten Spannungen-Differenz-Wert berechnet.
- Ein Maß für die jeweilige Leistung, die der weitere Umrichter an seinen beiden parallelen Ausgängen jeweils tatsächlich abgibt, wird gemessen.
- Der weitere Umrichter wird mit dem Ziel angesteuert, dass die Differenz zwischen den Werten der jeweils tatsächlich abgegebenen elektrischen Leistung gleich dem berechneten Leistungen-Sollwert ist. Für diese Ansteuerung werden die beiden gemessenen Werte für die an den beiden Ausgängen tatsächlich abgegebene Leistung verwendet.

Diese Ausgestaltung ermöglicht es, zwei gleichartige Spannungs-Lieferanten bereitzustellen und dadurch Redundanz zu ermöglichen. Außerdem stellt diese Ausgestaltung einen dritten Spannungs-Lieferanten bereit, und jede Spannungsquelle umfasst zwei verschiedenartige Spannungs-Lieferanten, was die Redundanz und damit die Verfügbarkeit vergrößert. Die Anordnung mit den drei Spannungs-Lieferanten lässt sich leichter an unterschiedliche Betriebssituationen anpassen. Die Ausgestaltung führt dazu, dass unterschiedliche Leistungsabgaben an den beiden Ausgängen des weiteren Umrichters rasch kompensiert werden. Auf diese Weise werden unterschiedliche Zustände der beiden gleichartigen Spannungs-Lieferanten rasch kompensiert. Im Falle von zwei Batteriesystemen als den beiden gleichartigen Spannungs-Lieferanten werden unterschiedliche Ladezustände rasch kompensiert.

Lösungsgemäß werden wenigstens im Normalbetrieb unterschiedliche Leistungsabgaben der beiden Spannungsquellen automatisch kompensiert. Hierfür werden die beiden Umrichter mit dem Ziel angesteuert, dass die Differenz zwischen den tatsächlichen Leistungs-Werten gleich einem berechneten Sollwert ist. In einer Ausgestaltung wird diese Regelung zeitweise unterbrochen, wenn festgestellt wird, dass ein erster Umrichter mit Überlast betrieben wird, d.h. die tatsächliche elektrische Leistung, die der erste Umrichter aufnimmt oder abgibt, oberhalb einer vorgegebenen Leistungs-Schranke liegt. Bevorzugt wird in diesem Falle ein zweiter Umrichter, der mit demselben Verbraucher wie der erste Umrichtern verbunden ist, zusätzlich mit derselben Spannungsquelle wie der erste Umrichter verbunden. Die beiden Umrichter sind also parallel geschaltet, und die Leistungsaufnahme oder Leistungsabgabe des ersten Umrichters wird reduziert. Dieser Zustand wird aufrecht erhalten, bis die Leistungsaufnahme und / oder Leistungsabgabe des ersten Umrichters wieder unterhalb der Leistungs-Schranke liegt. Diese Ausgestaltung führt in vielen Situationen dazu, dass die unerwünschte Überlast des ersten Umrichters rasch beseitigt wird. Dafür wird zeitweise in Kauf genommen, dass die beiden Spannungsquellen unterschiedlich stark entladen werden.

Nachfolgend werden das erfindungsgemäße Unterwasserfahrzeug sowie das erfindungsgemäße Verfahren zur Leistungsregelung anhand eines in den Zeichnungen dargestellten Ausführungsbeispiels näher erläutert. Hierbei zeigen:
Fig. 1 eine beispielhafte Topologie eines elektrischen Netzes an Bord eines U-Boots, in welchem die Erfindung eingesetzt wird;
Fig. 2 eine Detailansicht des Netzes von Fig. 1 mit zwei Umrichtern;
Fig. 3 einen beispielhaften funktionalen Zusammenhang zwischen der Stromstärken-Differenz und der Spannungen-Differenz in Form einer Gerade durch den Ursprung;

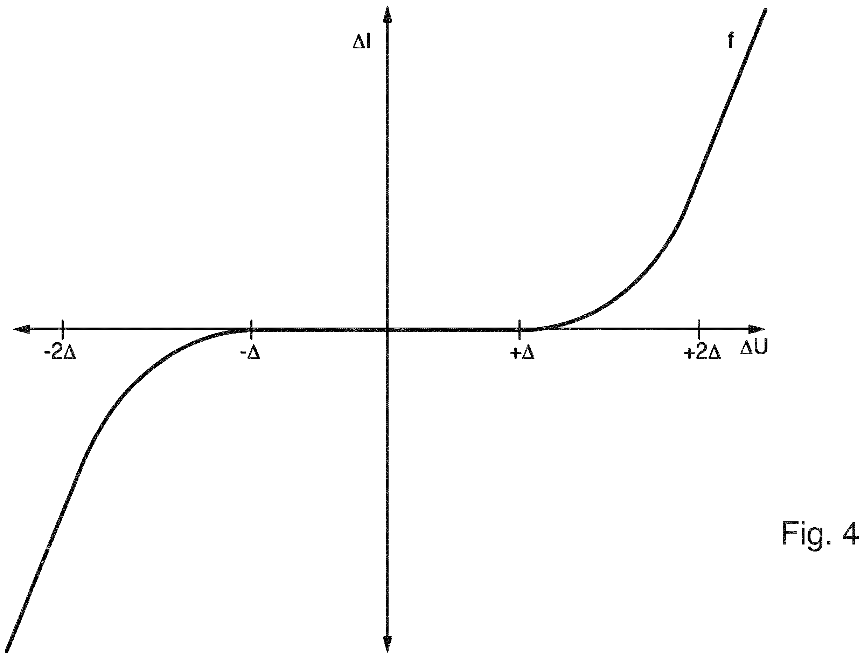

Fig. 4 einen alternativen beispielhaften funktionalen Zusammenhang zwischen der Stromstärken-Differenz und der Spannungen-Differenz mit zwei überproportionalen Bereichen;

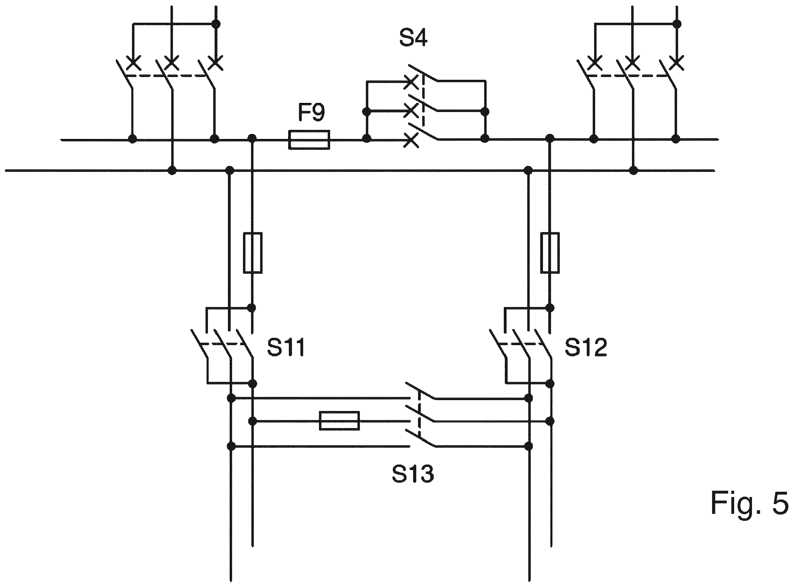

Fig. 5 einen Ausschnitt aus der Topologie von Fig. 1, welcher einen Notbetrieb mit nur noch einer Spannungsquelle erläutert.

Im Ausführungsbeispiel wird die Erfindung an Bord eines bemannten Unterseeboots (U-Boots) eingesetzt. Fig. 1 zeigt einen Ausschnitt aus einer beispielhaften Topologie eines elektrischen Netzes an Bord dieses U-Boots.

Ein elektrischer Motor M treibt über eine Welle den oder mindestens einen Propeller des U-Boots an. Im Ausführungsbeispiel ist der Propeller-Motor M als Permanent-Synchron-Motor ausgestaltet. Der Motor M wird entweder über mindestens einen von zwei Generatoren G1, G2 mit elektrischer Energie versorgt, wobei die Generatoren G1, G2 beispielsweise von mindestens einem Dieselmotor (nicht gezeigt) des U-Boots angetrieben werden. Oder der Motor M wird mindestens dann, wenn die Generatoren G1, G2 nicht angetrieben werden, von mindestens einer Brennstoffzelle FC und / oder von zwei Batterien B1, B2 mit elektrischer Energie versorgt. Möglich ist also, dass die Brennstoffzelle FC und die beiden Batterien B1 und B2 parallel zueinander arbeiten.

Das elektrische Netz des Ausführungsbeispiels besitzt zwei Spannungsquellen, nämlich eine erste Spannungsquelle mit der Batterie B1 und eine zweite Spannungsquelle mit der Batterie B2, sowie eine Vielzahl von elektrischen Verbrauchern. In einer störungsfreien Betriebssituation werden viele elektrische Verbraucher gleichzeitig von beiden Spannungsquellen versorgt, was weiter unten beschrieben wird. Jede Spannungsquelle ist aber so ausgelegt, dass sie alleine alle Verbraucher - oder wenigstens alle betriebsnotwendigen Verbraucher - für einen bestimmten Zeitraum alleine versorgen kann. Somit wird Redundanz für den Fall bereitgestellt, dass eine Spannungsquelle ausgefallen ist.

In Fig. 1 werden beispielhaft folgende elektrische Verbraucher des Bordnetzes gezeigt:
- ein Teilnetz AC mit elektrischen Verbrauchern von dreiphasigem Wechselstrom mit 115 V und 60 Hz,
- zwei Teilnetze DC1, DC2 mit elektrischen Verbrauchern von Gleichstrom der Batteriespannung,
- zwei Teilnetze DC3, DC4 mit elektrischen Verbrauchern von Gleichstrom jeweils einer von der Batteriespannung abweichenden Spannung und
- drei beispielhafte Wechselstrom-Motoren M1, M2, M3.

Der in Fig. 1 gezeigte Ausschnitt der Topologie des Bordnetzes umfasst außerdem mehrere Umrichter, nämlich die folgenden:
- zwei parallel arbeitende und bevorzugt gleichartig ausgestaltete DC/AC-Umrichter (Inverter) U1.1 und U1.2, die Gleichstrom der Batteriespannung in dreiphasigen Wechselstrom für das Teilnetz AC umwandeln,
- einen DC/DC-Umrichter (Konverter) U6, der den von der Brennstoffzelle FC gelieferten Gleichstrom in Gleichstrom der Batteriespannung umwandelt und zwei Ausgänge U6.1 und U6.2 aufweist,
- zwei parallel arbeitende und bevorzugt gleichartig ausgestaltete DC/DC-Umrichter U2.1 und U2.2, die Gleichstrom der Batteriespannung in Gleichstrom in der Spannung, welche das Teilnetz DC3 benötigt, umwandeln,
- zwei parallel arbeitende und bevorzugt gleichartig ausgestaltete DC/DC-Umrichter U3.1 und U3.2, die Gleichstrom der Batteriespannung in Gleichstrom in der Spannung, welche das Teilnetz DC4 benötigt, umwandeln,
- zwei parallel arbeitende und bevorzugt gleichartig ausgestaltete DC/AC-Umrichter U4.1 und U4.2, welche aus Gleichstrom der Batteriespannung Wechselstrom für den Propeller-Motor M generieren, und
- jeweils ein Frequenz-Umrichter U5.1 und U5.2 für die Motoren M1 und M3.

In einer bevorzugten Ausgestaltung sind alle Umrichter oder wenigstens einige der Umrichter bidirektional ausgelegt, d. h. Strom kann auch von den Verbrauchern zurück zu den Spannungsquellen fließen.

Außerdem werden in Fig. 1 folgende weitere Bestandteile gezeigt:
- eine Haupt-Stromschiene SB,
- ein Anschluss Ch an eine an Land montierte Aufladestation,
- zwei Leistungsschalter S1 und S7, welche jeweils einen Umrichter-Ausgang U6.1 und U6.2 wahlweise mit der Haupt-Stromschiene SB verbinden oder von ihr trennen,
- zwei weitere Leistungsschalter S2 und S6, welche jeweils einen Generator G1 und G2 wahlweise mit der Haupt-Stromschiene SB verbinden oder von ihr trennen,
- zwei weitere Leistungsschalter S3 und S5, welche jeweils einen Umrichter U4.1 und U4.2 für den Motor M wahlweise mit der Haupt-Stromschiene SB verbinden oder von ihr trennen,
- zwei weitere Leistungsschalter S9 und S10, welche jeweils eine Batterie B1 und B2 wahlweise mit der Haupt-Stromschiene SB verbinden oder von ihr trennen,
- jeweils ein Schalter S1.1, ... vor einem Umrichter U1.1,...,
- jeweils ein Schalter vor den Teilnetzen DC1 und DC2,
- vier weitere Leistungsschalter S4, S11, S12, S13, welche die Haupt-Stromschiene SB wahlweise unterbrechen oder verbinden, und
- verschiedene Sicherungen, unter anderem die Sicherung F9 für den Leistungsschalter S4 und Sicherungen vor den Umrichtern U2.1 bis U3.2.

Im normalen Betrieb sind die Leistungsschalter S4 und S13 offen, und die beiden Leistungsschalter S11 und S12 sind geschlossen. Das Teilnetz DC1 ist dann nur mit der Batterie B1 verbunden, das Teilnetz DC2 nur mit der Batterie B2. Die übrigen Teilnetze AC, DC3 und DC4 sowie die Motoren M1, M2 und M3 sind mit beiden Batterien B1 und B2 verbunden und können daher gleichzeitig aus beiden Batterien B1, B2 mit elektrischer Energie versorgt werden.

Jeweils zwei DC/AC-Umrichter U1.1 und U1.2 sowie jeweils zwei DC/DC-Umrichter U2.1 und U2.2 sowie U3.1 und U3.2 sind parallel geschaltet. Solange beide Spannungsquellen intakt sind, ist jeweils ein Umrichter U1.1, U2.1 und U3.1 mit der ersten Batterie B1 verbunden, der andere Umrichter U1.2, U2.2 und U3.2 mit der zweiten Batterie B2. Außerdem sind die Umrichter U1.1, U2.1 und U3.1 mit dem Ausgang U6.1 des Umrichters U6 für die Brennstoffzelle FC verbunden, die Umrichter U1.2, U2.2 und U3.2 mit dem Ausgang U6.2. Jedem Umrichter U1.1, ... ist jeweils ein eigener Schalter S1.1, ... zugeordnet. Jeweils zwei parallele Umrichter U1.1 und U1.2, U2.1 und U2.2 sowie U3.1 und U3.2 sind galvanisch voneinander getrennt.

In einer idealen Betriebssituation liefern beide Batterien B1 und B2 die gleiche Spannung. Im laufenden Betrieb kann hingegen die eine Batterie B1 oder B2 zeitweise stärker belastet sein als die andere Batterie B2 oder B1. Daher kann die Situation auftreten, dass die Spannung an der einen Batterie kleiner ist als die Spannung an der anderen Batterie.

In einem herkömmlichen Bordnetz ist zwischen zwei parallelen Umrichtern und den beiden Spannungsquellen jeweils mindestens eine Diode geschaltet. Falls die eine Spannungsquelle eine höhere Spannung liefert als die andere, so bewirken die Dioden folgenden Zustand: Die Spannungsquelle mit der höheren Spannung versorgt alleine die Verbraucher mit den parallelen Umrichtern, und die andere Spannungsquelle mit der niedrigeren Spannung versorgt nur diejenigen Verbraucher, die ausschließlich mit dieser anderen Spannungsquelle verbunden sind. Im Beispiel von Fig. 1 würde dann, wenn die Spannungsquelle mit der Batterie B2 eine niedrigere Spannung liefert, diese Spannungsquelle zeitweise nur den Verbraucher DC2 und die Spannungsquelle mit der Batterie B1 alle übrigen in Fig. 1 gezeigten Verbraucher versorgen. Aufgrund dieses Zustandes der Dioden wird die Batterie in der Spannungsquelle mit der höheren Spannung stärker entladen als die andere Batterie, und die Differenz zwischen den beiden Versorgungs-Spannungen nimmt ab, bis die Differenz in einem vorgegebenen Toleranzbereich liegt. Dann werden die Dioden wieder leitend geschaltet. Durch dieses Vorgehen werden über die Zeit beide Batterien B1, B2 gleich stark entladen.

Nachteilig bei diesem Vorgehen ist, dass an den Dioden elektrische Leistung als Verlustleistung verbraucht wird. Ein weiterer Nachteil ist, dass durch die Verlustleistung Wärme erzeugt werden kann, die abgeführt werden muss. Außerdem kann ein Verbraucher nicht elektrische Leistung in das Netz zurück speisen, weil Dioden nur in eine Richtung durchlässig sind.

Die Erfindung bewirkt ebenfalls, dass die beiden Spannungsquellen über die Zeit gleichmäßig belastet werden, vermeidet aber die drei gerade genannten Nachteile herkömmlicher Systeme.

Die jeweilige Versorgungs-Spannung, die an einem Umrichter U1.1 und U1.2, U2.1 und U2.2 und U3.1 und U3.2 anliegt und von einer Spannungsquelle B1 oder B2 erzeugt wird, wird gemessen. Die gemessenen Spannungs-Werte werden lösungsgemäß verwendet, um die parallel angeordneten Umrichter anzusteuern.

Das lösungsgemäße Verfahren wird im Folgenden mit Bezug auf Fig. 2 beispielhaft für die beiden parallelen DC/DC-Umrichter U2.1 und U2.2 erläutert, welche zusammen die beiden Verbraucher M1 (mit dem Frequenz-Umrichter U5.1) und DC3 mit Gleichstrom versorgen. Das Verfahren wird automatisch durchgeführt, erfordert also keinen Benutzereingriff, und verwendet die beiden gemessenen Werte für die Versorgungs-Spannungen (Eingangs-Spannungen) U_FN1 und U_FN2, welche an den beiden Umrichtern U2.1 und U2.2 anliegen. In der idealen Betriebssituation sind diese beiden Spannungs-Werte gleich, in einer realen Betriebssituation können sie voneinander abweichen. Die Differenz ΔU = U_FN1 - U_FN2 zwischen den beiden gemessenen Spannungs-Werten wird berechnet. Diese Differenz ΔU kann positiv, negativ oder gleich Null sein.

Aus dem gemessenen Spannungen-Differenz-Wert ΔU wird automatisch ein Sollwert ΔI für die Stromstärken-Differenz hergeleitet. Diese Sollwert ΔI ist eine geforderte Differenz zwischen den beiden Stromstärken l_ln_Con1 und I_In_Con2 derjenigen beiden Eingangs-Ströme, welche in die beiden parallelen Umrichtern U2.1 und U2.2 fließen und bewirken, dass die beiden Verbraucher M1 bzw. DC3 mit Gleichstrom versorgt werden. Vorgegeben wird also eine Soll-Differenz ΔI zwischen den beiden Stromstärken an den beiden Eingängen der Umrichter U2.1 und U2.2. Diese Eingänge sind mit der Haupt-Stromschiene SB verbunden.

Der Sollwert ΔI wird wie folgt berechnet: Falls ΔU größer als Null oder größer als eine oberhalb von Null liegende vorgegebene Schranke ist, falls also an U2.1 eine höhere VersorgungsSpannung anliegt als an U2.2, so ist auch der Sollwert ΔI größer als Null, d.h. der Umrichter U2.1 soll Strom mit einer größeren Stromstärke erhalten als der Umrichter U2.2. Entsprechend ist der Sollwert ΔI kleiner als Null, d.h. der Umrichter U2.1 soll Strom mit einer geringeren Stromstärke erhalten als der Umrichter U2.2, wenn ΔU kleiner als Null oder kleiner als eine unterhalb von Null liegende Schranke ist.

Die beiden Umrichter U2.1 und U2.2 werden mit dem Ziel angesteuert, dass die tatsächlichen Eingangs-Stromstärken I_ln_Con1 und I_In_Con2 der Ströme in die beiden Umrichter U2.1 und U2.2 die Bedingung ΔI = I_ln_Con1 - I_In_Con2 erfüllen. Die beiden einzelnen Stromstärken I_ln_Con1 und I_In_Con2 können natürlich über der Zeit variieren, weil die aufsummierte Leistungsaufnahme durch die beiden Verbraucher M1 und DC3 schwanken kann. Die Umrichter U2.1 und U2.2 werden mit dem Ziel angesteuert, dass trotzdem die Bedingung ΔI = I_ln_Con1 - I_In_Con2 erhalten bleibt. Dadurch wird die erste Spannungsquelle mit der Batterie B1 zumindest zeitweise dann stärker belastet als die zweite Spannungsquelle mit der Batterie B2, wenn die erste Spannungsquelle eine höhere Spannung liefert als die zweite Spannungsquelle. Das Umgekehrte gilt entsprechend.

In der gerade beschriebenen Ausführungsform wurde aus der Werte-Differenz ΔU ein Sollwert ΔI für die Differenz zwischen den Stromstärken an den beiden Eingängen der beiden Umrichter U2.1 und U2.2 berechnet. Anstelle der Eingangs-Stromstärke lässt sich auch ein anderes Maß für die elektrische Leistung verwenden, welche ein Umrichter U2.1 und 2.2 von der jeweiligen Spannungsquelle aufnimmt. Beispielsweise werden die Ausgangs-Stromstärke oder ein Maß für die vom Umrichter aufgenommene oder abgegebene elektrische Leistung verwendet. Im Folgenden wird weiterhin beispielhaft die Eingangs-Stromstärke als Maß für die Leistung, die ein Umrichter aufnimmt, verwendet.

Die Abfolge, dass die beiden Werte für die Eingangs-Spannungen U_FN1 und U_FN2 gemessen werden und aus der Differenz ΔU der Spannungs-Werte ein Sollwert ΔI für die Stromstärken-Differenz hergeleitet und für die Ansteuerung der Umrichter U2.1 und 2.2 verwendet wird, wird im Ausführungsbeispiel regelmäßig wiederholt, beispielsweise mit einer festen vorgegebenen Abtastrate. Oder ein neuer Sollwert ΔI für die Stromstärken-Differenz wird ereignisgesteuert immer dann berechnet, wenn die Differenz ΔU der gemessenen Werte für die Eingangs-Spannungen um mehr als eine vorgegebenen Toleranz von demjenigen Differenz-Wert abweicht, aus dem der aktuell verwendete Sollwert ΔI hergeleitet wurde. In beiden Fällen wird durch das lösungsgemäße Vorgehen sichergestellt, dass diejenige Spannungsquelle, die aktuell die höhere Spannung bereitstellt, stärker belastet wird als die andere Spannungsquelle, und zwar umso mehr, je größer die Differenz zwischen den Spannungs-Werten ist.

Wie bereits dargelegt, wird abhängig von der Differenz zwischen den gemessenen Werten ΔU der beiden Eingangs-Spannungen U_FN1 und U_FN2 ein Sollwert ΔI für die Stromstärken-Differenz berechnet und für eine Ansteuerung der beiden Umrichter U2.1 und U2.2 verwendet. In einer Ausgestaltung wird hierfür ein vorgegebener und abgespeicherter funktionaler Zusammenhang ΔI = f(ΔU) angewendet, um den Leistungen-Sollwert ΔI abhängig von dem Spannungen-Differenz-Wert ΔU zu berechnen. Dieser funktionale Zusammenhang f wird vorzugsweise einmal vorab aufgestellt und in einer rechnerverfügbaren Weise abgespeichert. Beim Aufstellen des funktionalen Zusammenhangs f werden Randbedingungen berücksichtigt, welche aus Eigenschaften von Bestandteilen des Netzes resultieren, beispielsweise maximal zulässige oder mindestens erforderliche Spannungen und / oder Stromstärken.

Verschiedene Ausgestaltungen für diesen funktionalen Zusammenhang f sind möglich. Beispielsweise ist der funktionale Zusammenhang f eine Gerade durch den Ursprung. Fig. 3 zeigt beispielhaft eine solche Gerade. Falls beispielsweise die Spannungen-Differenz ΔU den Wert 5 annimmt, so wird als Sollwert ΔI für die Stromstärken-Differenz der Wert 3 berechnet.

Möglich ist auch, dass der funktionale Zusammenhang f so ausgestaltet ist, dass der Sollwert ΔI überproportional mit wachsender Differenz ΔU ansteigt und überproportional mit fallender Differenz ΔU abnimmt. In einer Ausgestaltung wird eine Differenz-Toleranz Δ vorgegeben. Solange der Betrag |ΔU| der Differenz ΔU kleiner als diese Differenz-Toleranz Δ ist, solange also die Werte U_FN1 und U_FN2 der Eingangs-Spannungen um nicht mehr als die Differenz-Toleranz Δ voneinander abweichen, bleibt der Sollwert ΔI gleich Null. Außerhalb der Toleranz Δ steigt der Sollwert ΔI proportional oder überproportional mit steigendem Differenzwert ΔU an und nimmt proportional oder überproportional mit fallendem Differenz-Wert ΔU ab. Fig. 4 zeigt beispielhaft einen solchen funktionalen Zusammenhang f. Der funktionale Zusammenhang f steigt im Bereich zwischen Δ und 2Δ überproportional an und danach proportional.

Vorzugsweise umfasst jede Umrichter U2.1 und 2.2 jeweils einen Spannungs-Sensor US.1 bzw. US.2, welche die an diesem Umrichter anliegende Eingangs-Spannung U_FN1 bzw. U_FN2 misst, sowie einen Stromstärken-Sensor IS.1 bzw. IS.2, welcher die Stromstärke I_ln_Con1 bzw. I_ln_Con2 am Eingang dieses Umrichters misst.

In einer Ausgestaltung werden die beiden gemessenen Werte für die Eingangs-Spannungen U_FN1 und U_FN2 an einen übergeordneten Regler (nicht gezeigt) übermittelt, wobei die Werte bevorzugt mit einer vorgegebenen Abtastrate gemessen und übermittelt werden. Dieser übergeordnete Regler kann nur für die beiden Umrichter U2.1 und U2.2 zuständig sein oder aber für weitere oder sogar für alle parallel angeordneten Umrichter im Bordnetz, insbesondere für die Umrichter U1.1 und U1.2 sowie U3.1 und U3.2. Der übergeordnete Regler führt die gerade beschriebene Abfolge durch und berechnet einen Sollwert ΔI für die Stromstärken-Differenz, beispielsweise mit der vorgegebenen Abtastrate oder ereignisgesteuert wie gerade beschrieben. Der berechnete Sollwert ΔI wird an die beiden Umrichter U2.1 und 2.2 übermittelt. In einer Ausgestaltung werden die beiden tatsächlichen Werte für die Eingangs-Stromstärke an den beiden Umrichtern U2.1 und U2.2 gemessen und ebenfalls an den übergeordneten Regler übermittelt. Der Regler berechnet bei Bedarf Stelleingriffe für die beiden Umrichter U2.1 und U2.2, um die Einhaltung der Bedingung ΔI = I_ln_Con1 - I_In_Con2 sicherzustellen, und übermittelt diese berechneten Stelleingriffe an die beiden Umrichter U2.1 und U2.2.

In einer anderen Ausgestaltung umfasst jeder Umrichter U2.1 und U2.2 zusätzlich zu den beiden Sensoren jeweils einen eigenen lokalen Regler R.1, R.2, wobei an jeden lokalen Regler R.1, R.2 die beiden gemessenen Werte für die Eingangs-Spannungen übermittelt werden. Der lokale Regler R.1 für den Umrichter U2.1 erhält also den Spannungs-Wert U_FN1 am Umrichter U2.1 selber sowie den Spannungs-Wert U_FN2 vom parallelen Umrichter U2.2, und das Entsprechende gilt für den lokalen Regler R.2 des Umrichters U2.2. Außerdem werden die beiden gemessenen Werte l_ln_Con1 und I_In_Con2 für die tatsächlichen Eingangs-Stromstärken an den beiden Umrichtern U2.1 und 2.2 an die beiden lokalen Regler R.1, R.2 übermittelt. Jeder lokale Regler R.1, R.2 berechnet den Sollwert ΔI für die beiden Eingangs-Stromstärken, berechnet bei Bedarf Stelleingriffe für den zugeordneten Umrichter U2.1 bzw. U2.2 und löst die entsprechenden Stelleingriffe am zugeordneten Umrichter aus.

Im Ausführungsbeispiel umfassen die beiden Umrichter U2.1 und 2.2 eine Vielzahl von Schaltelementen, beispielsweise MOSFET- und/oder IGBT-Transistoren. Ein Stelleingriff an einem Umrichter kann die Taktung oder einen sonstigen Zustand von mindestens einem solchen Schaltelement des Umrichters U2.1, U2.2 verändern.

In einer bevorzugten Ausgestaltung sind die beiden Umrichter U2.1 und 2.2 als bidirektionaler Umrichter ausgestaltet, beispielsweise in Form einer "dual active bridge". Der Begriff "bidirektional" bedeutet, dass der Strom nicht nur von der Spannungsquelle B1, B2 durch die Umrichter U2.1 und U2.2 zu den Verbrauchern M1 und DC3 fließen kann, sondern umgekehrt in das Netz zurück fließen kann, wenn ein Verbraucher zeitweise Strom abgibt. Bekanntlich kann ein elektrischer Motor wie der Motor M1 auch als ein Generator wirken. Würden wie in einem herkömmlichen Bordnetz Dioden verwendet, so wäre eine solche Rückspeisung nicht möglich.

Das Vorgehen, für zwei parallele Umrichter einen Sollwert ΔI für die Stromstärken-Differenz abhängig von der Differenz ΔU zwischen den Werten der beiden Eingangs-Spannungen zu berechnen, wurde für die beiden parallelen Umrichter U2.1 und 2.2 beschrieben. In entsprechender Weise werden bevorzugt auch die anderen parallelen Umrichter des Bordnetzes angesteuert, insbesondere die Umrichter U1.1 und U1.2 sowie die Umrichter U3.1 und U3.2.

Die beiden parallel geschalteten Umrichter U4.1 und U4.2 liefern Wechselstrom für den Propeller-Motor M. In einer Ausgestaltung besitzt der Propeller-Motor M zwei Mengen von Wicklungen, wobei eine Wicklungen-Menge mit dem Umrichter U4.1 und die andere Wicklungen-Menge mit dem Umrichter U4.2 verbunden ist. Das lösungsgemäße Verfahren wird entsprechend für diese beiden parallelen Umrichter U4.1 und U4.2 angewendet.

Das lösungsgemäße Verfahren wird bevorzugt ebenfalls für den Umrichter U6 vor der Batteriezelle FC angewendet. In einer Betriebssituation gehören zu der ersten Spannungsquelle die Batterie B1 und die Brennstoffzelle FC und zu der zweiten Spannungsquelle die Batterie B2 und ebenfalls die Brennstoffzelle FC. Die Brennstoffzelle FC ist also beiden Spannungsquellen zugeordnet. Die beiden Leistungsschalter S4 und S13 sind im Normalbetrieb geöffnet, so dass die beiden Spannungsquellen voneinander getrennt sind.

Der Umrichter U6 besitzt zwei Ausgänge U6.1 und U6.2, wobei der eine Ausgang U6.1 zu der ersten Spannungsquelle und der andere Ausgang U6.2 zu der zweiten Spannungsquelle gehört. Die jeweilige Versorgungsspannung von den beiden Spannungsquellen wird gemessen, beispielsweise an den beiden Leistungsschaltern S1 und S7. Ein Spannungen-Differenz-Wert ΔU wird aus den beiden gemessenen Spannungswerten abgeleitet. Ein Sollwert ΔI für die Stromstärken-Differenz wird automatisch hergeleitet, wofür so wie oben beschrieben ein funktionaler Zusammenhang f verwendet wird. In dieser Anwendung ist der Sollwert ΔI eine geforderte Differenz zwischen den beiden Stromstärken, welche von den beiden Ausgängen U6.1 und U6.2 des Umrichters U6 zu den beiden Leistungsschaltern S1 bzw. S7 fließen. Diese beiden Ausgänge U6.1 und U6.2 sind mit der Haupt-Stromschiene SB verbunden. Auch in dieser Anwendung werden unterschiedliche Ladezustände der beiden Batterien B1 und B2 automatisch kompensiert.

Wie oben dargelegt, wird laufend ein Maß I_ln_Con1, I_In_Con2 für die jeweilige elektrische Leistung, welche die Umrichter U2.1 und 2.2 aufnehmen, gemessen. Im Normalbetrieb sind die Leistungsschalter S4 und S13 geöffnet, so dass der Umrichter U2.1 nur mit der ersten Spannungsquelle mit der Batterie B1 und der Umrichter U2.2 nur mit der zweiten Spannungsquelle mit der Batterie B2 verbunden ist.

In einer bevorzugten Ausgestaltung wird der gemessene Wert für die tatsächliche Leistungsaufnahme durch einen Umrichter mit einer vorgegebenen Leistungs-Schranke verglichen. Falls ein Umrichter U2.1 oder U2.2 eine elektrische Leistung aufnimmt oder abgibt, die oberhalb der Leistungs-Schranke liegt, so wird sichergestellt, dass die Leistungsaufnahme oder Leistungsabgabe dieses Umrichters U2.1 oder U2.2 rasch wieder auf die Leistungs-Schranke reduziert wird. Zugleich wird sichergestellt, dass die Verbraucher M1 und DC3 ausreichende elektrische Leistung erhalten. Die lösungsgemäße Regelung wird vorübergehend abgeschaltet oder umgangen, bis die Leistungs-Schranke nicht mehr überschritten ist. Der andere Umrichter U2.2 oder U2.1 wird so angesteuert, dass der andere Umrichter eine höhere Leistung aufnimmt oder abgibt, auch wenn dadurch unterschiedliche Ladezustände der beiden Spannungsquellen B1 und B2 länger erhalten bleiben. Dieser Zustand wird aufrecht erhalten, bis die Leistungsaufnahme wieder gleich oder unterhalb der Leistungs-Schranke ist. In einer Ausgestaltung wird zeitweise der andere Umrichter U2.2 oder U2.1 zusätzlich mit der aktuell stärker aufgeladenen Spannungsquelle verbunden, so dass dieser andere Umrichter U2.2 oder U2.1 dann mit beiden Spannungsquellen verbunden ist und die stärker entladene Spannungsquellen weniger belastet wird. Indem die lösungsgemäße Regelung vorübergehend abgeschaltet wird, wird verhindert, dass eine Spannungsquelle sehr hoch belastet wird und ein starker Strom von einer Spannungsquelle zu dem Umrichter fließt.

Wie bereits dargelegt, werden viele Verbraucher des Bordnetzes gleichzeitig von beiden Spannungsquellen B1, B2 mit elektrischer Energie versorgt. Jedoch kann die Situation auftreten, dass eine Spannungsquelle B1, B2 ausfällt oder die Verbindung von der Spannungsquelle B1, B2 zur Haupt-Stromschiene SB unterbrochen ist. In einer Ausgestaltung wird diese fehlerhafte Situation dadurch entdeckt, dass der gemessene Wert für die Eingangs-Spannung an einem Umrichter mit einer vorgegebenen Spannungs-Schranke verglichen wird. Fällt die Eingangs-Spannung unter diese Spannungs-Schranke, so ist die Spannungsquelle B1, B2 möglicherweise ausgefallen, oder eine Verbindung zu ihr ist unterbrochen. In einer Ausgestaltung wird zusätzlich die Spannung zwischen dieser Spannungsquelle B1, B2 und der Haupt-Stromschiene SB gemessen, um festzustellen oder auszuschließen, dass die Verbindung zwischen der Haupt-Stromschiene SB und dem Umrichter unterbrochen ist.

Falls tatsächlich eine Spannungsquelle B1 oder B2 ausgefallen ist, so vermag die anderen Spannungsquelle B2 oder B1 für einen bestimmten Zeitraum alle oder wenigstens die betriebsnotwendigen Verbraucher mit elektrischer Energie zu versorgen. In einer Ausgestaltung wird hierfür automatisch geprüft, ob der Schalter S13, der im Normalbetrieb geöffnet ist, freigegeben ist und daher geschlossen werden darf. Falls der Schalter S13 freigegeben wird, so schließt ein Benutzer manuell oder auch ein zentraler Regler des U-Boots automatisch den Schalter S13, wodurch im Beispiel von Fig. 1 beide Spannungsquellen B1, B2 mit den Verbrauchern M1, M2, M3, DC3, AC, DC4 verbunden sind. Der Schalter S13 wird dann freigegeben, wenn beide Bedingungen erfüllt sind:
- Der Leistungsschalter S4 ist geöffnet (ausgeschaltet).
- Der Schalter S11 ist geöffnet, und der Schalter S12 ist geschlossen. Oder der Schalter S11 ist geschlossen, und der Schalter S12 ist geöffnet.

Fig. 5 zeigt einen Ausschnitt aus der Topologie von Fig. 1 mit diesen Schaltern.

**Bezugszeichen**

| | |
|---|---|
| AC | Teilnetz mit elektrischen Verbrauchern von Wechselstrom mit drei Phasen, 115V, 60 Hz, über die Umrichter U1.1 und U1.2 mit beiden Spannungsquellen B1 und B2 verbunden |
| B1, B2 | Batterien, sind parallel geschaltet, durch die Schalter S9 und S10 mit der Haupt-Stromschiene SB verbunden |
| Ch | Verbindung zu einer ortsfesten Aufladestation |
| DC1 | Teilnetz mit elektrischen Verbrauchern von Gleichstrom der Batteriespannung, nur von der Spannungsquelle B1 versorgt |
| DC2 | Teilnetz mit elektrischen Verbrauchern von Gleichstrom der Batteriespannung, nur von der Spannungsquelle B2 versorgt |
| DC3 | Teilnetz mit elektrischen Verbrauchern von Gleichstrom in einer von der Batteriespannung abweichenden Spannung, über die Umrichter U2.1 und U2.2 mit beiden Spannungsquellen B1 und B2 verbunden |
| DC4 | Teilnetz mit elektrischen Verbrauchern von Gleichstrom in einer von der Batteriespannung abweichenden Spannung, über die Umrichter U3.1 und U3.2 mit beiden Spannungsquellen B1 und B2 verbunden |
| Δ | Differenz-Toleranz, bei deren Überschreitung eine Differenz ΔI für die Eingangs-Stromstärken vorgegeben wird |
| f | vorgegebener funktionaler Zusammenhang zwischen ΔI und ΔU |
| FC | Brennstoffzelle, über den Umrichter U6 mit der Haupt-Stromschiene SB verbunden, gehört zur beiden Spannungsquellen |
| G1, G2 | elektrische Generatoren, erzeugen Gleichstrom |
| I_ln_Con1 | Eingangs-Stromstärke am Umrichter U2.1, wird vom Stromstärken-Sensor IS.1 gemessen |
| I_ln_Con2 | Eingangs-Stromstärke am Umrichter U2.2, wird vom Stromstärken-Sensor IS.2 gemessen |
| ΔI | berechneter Sollwert für die Differenz zwischen den beiden Eingangs-Stromstärken l_ln_Con1 und l_ln_Con2 |
| IS.1,IS.2 | Stromstärken-Sensoren für die Umrichter U2.1, U2.2 |
| M | elektrischer Permanent-Synchron-Motor, erzeugt Wechselstrom, dreht den Propeller des U-Boots, mit den beiden Umrichtern U4.1 und U4.2 verbunden |
| M1, M2, M3 | Wechselstrom-Motoren |
| R.1, R.2 | lokaler Regler des Umrichters U2.1, U2.2 |
| S1, S7 | Leistungsschalter, welche die Umrichter-Ausgänge U6.1 und U6.3 wahlweise mit der Haupt-Stromschiene SB verbinden oder von ihr trennen, |
| S2, S6 | Leistungsschalter, welche die beiden Generatoren G1 und G2 wahlweise mit der Haupt-Stromschiene SB verbinden oder von ihr trennen |
| S3, S5 | Leistungsschalter, welche die beiden Umrichter U4.1 und U4.2 wahlweise mit der Haupt-Stromschiene SB verbinden oder von ihr trennen |
| S4, S11, S12, S13 | Leistungsschalter, welche die Haupt-Stromschiene SB wahlweise unterbrechen oder verbinden |
| S8 | Leistungsschalter, der die Verbindung Ch wahlweise mit der Haupt-Stromschiene SB verbindet oder von ihr trennt |
| S9, S10 | Leistungsschalter, welche die beiden Batterien B1 und B2 wahlweise mit der Haupt-Stromschiene SB verbinden oder von ihr trennen |
| SB | Haupt-Stromschiene, verbindet die Batterien B1 und B2 mit den Umrichtern für die elektrischen Verbraucher, lässt sich durch die Schalter S4 sowie S11, S13, S12 unterbrechen |
| S1.1, ... | Schalter vor den Umrichtern U 1.1,... |
| U1.1, U1.2 | parallel angeordnete Umrichter, erzeugen aus Gleichstrom Wechselstrom mit drei Phasen, 115V, 60 Hz für das Teilnetz AC und den Motor M2 |
| U2.1, U2.2 | parallel angeordnete Umrichter, erzeugen aus Gleichstrom der Batteriespannung Gleichstrom einer abweichenden Spannung für das Teilnetz DC3, umfassen in einer Ausgestaltung jeweils einen lokalen Regler R.1, R.2 |
| U3.1, U3.2 | parallel angeordnete Umrichter, erzeugen aus Gleichstrom der Batteriespannung Gleichstrom einer abweichenden Spannung für das Teilnetz DC4 |
| U4.1, U4.1 | parallel angeordnete Umrichter, erzeugen aus Gleichstrom Wechselstrom für den Propeller-Motor M |
| U5.1 | Frequenz-Umrichter, erzeugt aus Gleichstrom einer von der Batteriespannung abweichenden Spannung Wechselstrom für den Motor M1 |
| U5.2 | Frequenz-Umrichter, erzeugt aus Gleichstrom einer von der Batteriespannung abweichenden Spannung Wechselstrom für den Motor M3 |
| U6 | Umrichter, erzeugt aus dem von der Brennstoffzelle FC gelieferten Gleichstrom Gleichstrom der Batteriespannung, hat die beiden Ausgänge U6.1 und U6.2 |
| U6.1 | Ausgang des Umrichters U6, parallel zur Batterie B1 geschaltet |
| U6.2 | Ausgang des Umrichters U6, parallel zur Batterie B2 geschaltet |
| U_FN1 | Eingangs-Spannung, welche am Umrichter U2.1 anliegt, wird vom Spannungs-Sensor US.1 gemessen |
| U_FN2 | Eingangs-Spannung, welche am Umrichter U2.2 anliegt, wird vom Spannungs-Sensor US.2 gemessen |
| US.1, US.2 | Spannungs-Sensoren für die Umrichter U2.1, U2.2 |
| ΔU | Differenz zwischen den beiden gemessenen Werten für die Eingangs-Spannungen U_FN1 und U_FN2 |

## Patentansprüche

1. Verfahren zur Regelung der Lastverteilung in einem elektrischen Netz an Bord eines Unterwasserfahrzeugs,
wobei das Netz
- wenigstens zwei parallel angeordnete Spannungsquellen (B1, B2, FC),
- wenigstens einen elektrischen Verbraucher (M, ..., AC, DC3, ...) und
- für den oder mindestens einen Verbraucher (M, M1, ..., AC, DC3, ...) zwei parallel angeordnete Umrichter (U2.1, U2.2, ...)
umfasst,
wobei wenigstens in einem Normalbetrieb jeder Umrichter (U2.1, U2.2, ...) für den Verbraucher (M1, ..., AC, DC3, ...) mit einer Spannungsquelle (B1, B2, FC) verbunden ist und von der oder jeder anderen Spannungsquelle getrennt ist und
wobei das Verfahren die Schritte umfasst, dass
- jeder Umrichter (U2.1, U2.2, ...) Strom von der mit diesem Umrichter verbundenen Spannungsquelle (B1, B2, FC) in Strom für den Verbraucher (M, M1, ..., AC, DC3, ...) wandelt,
- der Verbraucher (M, M1, ..., AC, DC3, ...) von beiden Umrichtern (U2.1, U2.2, ...) gelieferten Strom verbraucht und
- unterschiedliche Leistungsabgaben der beiden Spannungsquellen (B1, B2, FC) automatisch kompensiert werden, wobei
der Schritt, die unterschiedlichen Leistungsabgaben zu kompensieren, die mindestens einmal durchgeführte Abfolge umfasst, dass
- die jeweilige Eingangs-Spannung (U_FN1, U_FN2) an jedem der beiden parallel angeordneten Umrichter (U2.1, U2.2, ...) gemessen wird,
- ein Spannungen-Differenz-Wert (ΔU) als Differenz zwischen den beiden gemessenen Werten der Eingangs-Spannungen (U_FN1, U_FN2) berechnet wird,
- abhängig von dem berechneten Spannungen-Differenz-Wert (ΔU) ein Sollwert (ΔI) für die Differenz zwischen zwei Maßen (I_In_Con1, I_In_Con2) für die beiden elektrischen Leistungen, welche die beiden Umrichter (U2.1, U2.2, ...) jeweils von der mit ihnen verbundenen Spannungsquelle (B1, B2, FC) aufnehmen oder jeweils an den Verbraucher (M, M1, ...,AC, DC3, ...) abgeben, berechnet wird,
- ein Maß (I_In_Con1, I_In_Con2) für die beiden elektrischen Leistungen, welche die beiden parallel angeordneten Umrichter (U2.1, U2.2, ...) tatsächlich jeweils aufnehmen oder abgeben, gemessen wird, und
- die beiden Umrichter (U2.1, U2.2, ...) unter Verwendung der beiden gemessenen Werte für die jeweils tatsächlich aufgenommene oder abgegebene Leistung mit dem Ziel angesteuert werden,
dass die Differenz zwischen den Werten der jeweils tatsächlich aufgenommenen oder abgegebenen elektrischen Leistungen (I_In_Con1, I_In_Con2) gleich dem berechneten Sollwert (ΔI) ist.

2. Verfahren nach Anspruch 1,
**dadurch gekennzeichnet, dass**
mindestens dann, wenn der Spannungen-Differenz-Wert (ΔU) außerhalb eines vorgegebenen Toleranzbereichs (Δ) liegt,
der berechnete Sollwert (ΔI)
- umso größer ist, je größer der Spannungen-Differenz-Wert ist, und
- umso kleiner ist, je kleiner der Spannungen-Differenz-Wert ist.

3. Verfahren nach einem der vorstehenden Ansprüche,
**dadurch gekennzeichnet, dass**
dann, wenn der Spannungen-Differenz-Wert (ΔU) innerhalb eines vorgegebenen Toleranzbereichs (Δ) liegt,
der berechnete Sollwert (ΔI) gleich Null ist.

4. Verfahren nach einem der vorstehenden Ansprüche,
**dadurch gekennzeichnet, dass**
als Maß für die elektrische Leistung, den ein Umrichter (U2.1, U2.2, ...) von der verbundenen Spannungsquelle (B1, B2, FC) aufnimmt oder an den verbundenen Verbraucher (M, M1, ..., AC, DC3, ...) abgibt,
die jeweilige Stromstärke (I_In_Con1, I_In_Con2) an einem mit der Spannungsquelle (B1, B2, FC) verbundenen Eingang oder einem mit dem Verbraucher (M, M1, ..., AC, DC3, ...) verbundenen Ausgang dieses Umrichters (U2.1, U2.2, ...) verwendet wird und als Differenz-Sollwert ein Sollwert (ΔI) für die Differenz zwischen den beiden Eingangs-Stromstärken oder Ausgangs-Stromstärken berechnet wird.

5. Verfahren nach einem der vorstehenden Ansprüche,
**dadurch gekennzeichnet, dass**
jedem der beiden mit dem Verbraucher (M, M1, ..., DC3, ...) verbundenen parallel angeordneten Umrichter (U2.1, U2.2, ...) jeweils ein lokaler Regler (R.1, R.2) zugeordnet ist,
wobei die zum Kompensieren durchgeführte Abfolge zusätzlich die Schritte umfasst, dass
- die beiden gemessenen Werte für die Eingangs-Spannungen (U_FN1, U_FN2) an den beiden Umrichtern (U2.1, U2.2, ...) sowie die beiden gemessenen Werte für die tatsächlich von den beiden Umrichtern (U2.1, U2.2, ...) aufgenommenen oder abgegebenen Leistungen (I_In_Con1, I_In_Con2) an beide lokalen Regler (R.1, R.2) übermittelt werden und
- jeder lokale Regler (R.1, R.2) den Differenz-Sollwert (ΔI) für die aufgenommenen oder abgegebenen Leistungen berechnet und abhängig von diesem Differenz-Sollwert (ΔI) denjenigen Umrichter (U2.1, U2.2, ...), dem dieser lokale Regler (R.1, R.2) zugeordnet ist, ansteuert.

6. Verfahren nach einem der vorstehenden Ansprüche,
**dadurch gekennzeichnet, dass**
das Bordnetz einen übergeordneten Regler umfasst,
wobei die zum Kompensieren durchgeführte Abfolge zusätzlich die Schritte umfasst, dass
- die beiden gemessenen Werte für die Eingangs-Spannungen (U_FN1, U_FN2) an den beiden Umrichtern (U2.1, U2.2, ...) sowie die beiden gemessenen Werte für die tatsächlich von den beiden Umrichtern (U2.1, U2.2, ...) aufgenommenen oder abgegebenen Leistungen (I_ln_Con1, I_In_Con2) an den übergeordneten Regler übermittelt werden und
- der übergeordnete Regler den Differenz-Sollwert (ΔI) für die aufgenommenen oder abgegebenen Leistungen (I_In_Con1, I_In_Con2) berechnet und abhängig von diesem Differenz-Sollwert (ΔI) beide Umrichter (U2.1, U2.2, ...) ansteuert.

7. Verfahren nach einem der vorstehenden Ansprüche,
**dadurch gekennzeichnet, dass**
für die Berechnung des Differenz-Sollwerts (ΔI)
ein vorgegebener funktionaler Zusammenhang (f), der eine Soll-Leistungs-Differenz als Funktion einer Soll-Spannungen-Differenz beschreibt,
auf den Spannungen-Differenz-Wert (ΔU) angewendet wird.

8. Verfahren nach Anspruch 7,
**dadurch gekennzeichnet, dass**
der funktionale Zusammenhang (f) eine Gerade ist.

9. Verfahren nach Anspruch 7,
**dadurch gekennzeichnet, dass**
der funktionale Zusammenhang (f) mindestens außerhalb eines vorgegebenen Toleranzbereichs (Δ) überproportional ansteigend ist.

10. Verfahren nach einem der vorstehenden Ansprüche,
**dadurch gekennzeichnet, dass**
der oder ein Verbraucher ein Motor (M) mit zwei parallel angeordneten Bestandteilen ist, wobei jeder der beiden parallel angeordneten Umrichter (U4.1, U4.2) an jeweils einen Motor-Bestandteil Strom liefert.

11. Verfahren nach einem der vorstehenden Ansprüche,
**dadurch gekennzeichnet, dass**
das Netz
- zwei gleichartige Spannungs-Lieferanten (B1, B2),
- einen dritten Spannungs-Lieferanten (FC) und
- einen weiteren Umrichter (U6)
umfasst,
wobei jeder Spannungsquelle jeweils ein gleichartiger Spannungs-Lieferant (B1, B2) und der dritte Spannungs-Lieferant (FC) zugeordnet ist, so dass der dritte Spannungs-Lieferant (FC) beiden Spannungsquellen zugeordnet ist,
wobei der weitere Umrichter (U6)
- einen Eingang, der mit dem dritten Spannungs-Lieferanten (FC) verbunden ist, und
- zwei parallel angeordnete Ausgänge (U6.1, U6.2)
umfasst,
wobei jeder Ausgang (U6.1, U6.2) des weiteren Umrichters (U6) zu jeweils einem gleichartigen Spannungs-Lieferanten (B.1, B.2) parallel geschaltet ist und
wobei unterschiedliche Leistungsabgaben der beiden gleichartigen Spannungs-Lieferanten (B1, B2) automatisch kompensiert werden,
wobei der Schritt, die unterschiedlichen Leistungsabgaben zu kompensieren, die mindestens einmal durchgeführte Abfolge umfasst, dass
- die jeweilige Ausgangs-Spannung an jedem der beiden parallel angeordneten Ausgänge (U6.1, U6.2) des weiteren Umrichters (U6) gemessen wird,
- der Spannungen-Differenz-Wert (ΔU) als Differenz zwischen den beiden gemessenen Werten der Ausgangs-Spannung berechnet wird,
- abhängig von dem berechneten Spannungen-Differenz-Wert ein Sollwert (ΔI) für die Differenz zwischen den beiden elektrischen Leistungen, welche der weitere Umrichter (U6) an seinen beiden Ausgängen (U6.1, U6.2) jeweils abgibt, berechnet wird,
- ein Maß (I_In_Con1, I_In_Con2) für die jeweilige elektrische Leistung, die der weitere Umrichter (U6) an seinen beiden Ausgängen (U6.1, U6.2) jeweils tatsächlich abgibt, gemessen wird und
- der weitere Umrichter (U6) unter Verwendung der beiden gemessenen Werte für die jeweils abgegebene Leistung mit dem Ziel angesteuert wird,
dass die Differenz zwischen den Werten der an den beiden Ausgängen (U6.1, U6.2) tatsächlich abgegebenen elektrischen Leistung gleich dem berechneten Sollwert (ΔI) ist.

12. Verfahren nach einem der vorstehenden Ansprüche,
**dadurch gekennzeichnet, dass**
dann, wenn ein Ausfall einer Spannungsquelle (B1, B2, FC) detektiert wird,
der oder jeder mit dieser Spannungsquelle verbundene Umrichter (U2.1, U2.2, ...) mit der oder einer anderen Spannungsquelle verbunden wird.

13. Verfahren nach Anspruch 12,
**dadurch gekennzeichnet, dass**
ein Ausfall einer Spannungsquelle (B1, B2, FC) mindestens dann automatisch detektiert wird,
wenn ein gemessener Wert für die Eingangs-Spannung an dem oder einem mit dieser Spannungsquelle (B1, B2, FC) verbundenen Umrichter (U2.1, U2.2, ...) kleiner als eine vorgegebene Spannungs-Schranke ist.

14. Verfahren nach einem der vorstehenden Ansprüche,
**dadurch gekennzeichnet, dass**
dann, wenn ein gemessener Wert für die von einem ersten Umrichter aufgenommene oder abgegebene elektrische Leistung eine vorgegebene Leistungs-Schranke übersteigt, ein zweiter Umrichter mindestens so lange zusätzlich mit derselben Spannungsquelle wie der erste Umrichter verbunden wird,
bis die vom ersten Umrichter aufgenommene oder abgegebene Leistung wieder unterhalb der Leistungs-Schranke liegt.

15. Unterwasserfahrzeug mit einem elektrischen Netz,
wobei das Netz
- wenigstens zwei parallel angeordnete Spannungsquellen (B1, B2),
- wenigstens einen elektrischen Verbraucher (M, M1, ..., DC3, ...) und
- für den oder mindestens einen Verbraucher (M, M1, ..., DC3, ...) mindestens zwei parallel angeordnete Umrichter (U2.1, U2.2, ...)
umfasst,
wobei wenigstens in einem Normalbetrieb jeder Umrichter (U2.1, U2.2, ...) für den Verbraucher (M, M1, ..., DC3, ...) mit einer Spannungsquelle (B1, B2, FC) verbunden ist und von der oder jeder anderen Spannungsquelle getrennt ist,
wobei jeder Umrichter (U2.1, U2.2, ...) dazu ausgestaltet ist, Strom von der mit dem Umrichter (U2.1, U2.2, ...) verbundenen Spannungsquelle (B1, B2, FC) in Strom für den Verbraucher (M, M1, ..., DC3, ...) zu wandeln,
wobei der Verbraucher (M, M1, ..., DC3, ...) dazu ausgestaltet ist, von den beiden parallel angeordneten Umrichtern (U2.1, U2.2, ...) gelieferten Strom zu verbrauchen, und
wobei das Unterwasserfahrzeug dazu ausgestaltet ist, unterschiedliche Leistungsabgaben der beiden Spannungsquellen automatisch zu kompensieren,
wobei
jedem Umrichter jeweils ein Spannungs-Sensor (US.1, US.2) zugeordnet ist, der dazu ausgestaltet ist, die Eingangs-Spannung (U_FN1, U_FN2) an diesem Umrichter (U2.1, U2.2, ...) zu messen,
jedem Umrichter (U2.1, U2.2, ...) weiterhin jeweils ein Leistungs-Sensor (IS.1, IS.2) zugeordnet ist, der dazu ausgestaltet ist, ein Maß (I_In_Con1, I_In_Con2) für die elektrische Leistung, welche der Umrichter (U2.1, U2.2, ...) tatsächlich jeweils aufnimmt oder abgibt, zu messen, und
das Unterwasserfahrzeug eine Rechnereinheit aufweist, die dazu ausgestaltet ist, für die Kompensation der unterschiedlichen Leistungsabgaben
- ein Spannungen-Differenz-Wert (ΔU) als Differenz zwischen den beiden gemessenen Werten der Eingangs-Spannungen (U_FN1, U_FN2) zu berechnen,
- abhängig von dem berechneten Spannungen-Differenz-Wert (ΔU) ein Sollwert (ΔI) für die Differenz zwischen den beiden Maßen (I_In_Con1, I_In_Con2) für die beiden elektrischen Leistungen, welche die beiden Umrichter (U2.1, U2.2, ...) jeweils von der mit ihnen verbundenen Spannungsquelle (B1, B2, FC) aufnehmen oder jeweils an den Verbraucher (M, M1, ..., AC, DC3, ...) abgeben, zu berechnen und
- die beiden Umrichter (U2.1, U2.2, ...) unter Verwendung der beiden gemessenen Werte für die jeweils tatsächlich aufgenommene oder abgegebene Leistung mit dem Ziel anzusteuern, dass die Differenz zwischen den Werten der jeweils tatsächlich aufgenommenen oder abgegebenen elektrischen Leistungen (I_In_Con1, I_In_Con2) gleich dem berechneten Sollwert (ΔI) ist.

## Claims

1. A method for the regulation of the load distribution in an on-board electrical network of an underwater vehicle,
wherein the network comprises:
- at least two voltage sources arranged in parallel (B1, B2, FC),
- at least one electrical load (M, ..., AC, DC3, ...) and
- for the or at least one load (M, M1, ..., AC, DC3, ...), two converters arranged in parallel (U2.1, U2.2, ...),
wherein, at least in normal operation, each converter (U2.1, U2.2, ...) for the load (M1, ..., AC, DC3, ...) is connected to a voltage source (B1, B2, FC) and is separated from the other, or from each other, voltage source, and
wherein the method comprises the following steps:
- each converter (U2.1, U2.2, ...) converts current from the voltage source (B1, B2, FC) which is connected to said converter into current for the load (M, M1, ..., AC, DC3, ...),
- the load (M, M1, ..., AC, DC3, ...) consumes current supplied by both converters (U2.1, U2.2, ...), and
- different power outputs from the two voltage sources (B1, B2, FC) are automatically compensated,
wherein
the step for the compensation of the different power outputs comprises the sequence, which is executed at least once, wherein
- the respective input voltage (U_FN1, U_FN2) on each of the two converters arranged in parallel (U2.1, U2.2, ...) is measured,
- a voltage-difference value (ΔU) is calculated as the difference between the two measured values of the input voltages (U_FN1, U_FN2),
- according to the calculated voltage-difference value (ΔU), a target value (ΔI) is calculated for the difference between two quantitative measures (I_ln_Con1, I_In_Con2) for the two electric powers respectively taken up by the two converters (U2.1, U2.2, ...) from the voltage source (B1, B2, FC) which is connected thereto, or respectively delivered to the load (M, M1, ..., AC, DC3, ...) by the two converters (U2.1, U2.2, ...),
- a quantitative measure (I_ln_Con1, I_In_Con2) for the two electric powers which are actually respectively taken up or delivered by the two converters arranged in parallel (U2.1, U2.2, ...) is measured, and
- the two converters (U2.1, U2.2, ...) are actuated, by the employment of the two measured values for the power respectively actually taken up or delivered, with the objective that the difference between the values of the electric powers respectively actually taken up or delivered (I_ln_Con1, I_In_Con2) should be equal to the calculated target value (ΔI).

2. The method as claimed in claim 1,
**characterized in that**
at least if the voltage-difference value (ΔU) lies outside a predefined tolerance range (Δ),
the calculated target value (ΔI)
- is greater, the greater the voltage-difference value, and
- is smaller, the smaller the voltage-difference value.

3. The method as claimed in one of the preceding claims,
**characterized in that,**
if the voltage-difference value (ΔU) lies within a predefined tolerance range (Δ),the calculated target value (ΔI) is equal to zero.

4. The method as claimed in one of the preceding claims,
**characterized in that,**
as a quantitative measure for the electric power which is taken up by a converter (U2.1, U2.2, ...) from the connected voltage source (B1, B2, FC) or is delivered by a converter (U2.1, U2.2, ...) to the connected load (M, M1, ..., AC, DC3, ...),
the respective current strength (I_ln_Con1, I_In_Con2) at an input which is connected to the voltage source (B1, B2, FC) or at an output of said converter (U2.1, U2.2, ...) which is connected to the load (M, M1, ..., AC, DC3, ...) is employed, and
as a differential target value, a target value (ΔI) for the difference between the two input current strengths or output current strengths is calculated.

5. The method as claimed in one of the preceding claims,
**characterized in that**
a local controller (R.1, R.2) is respectively assigned to each of the two converters arranged in parallel (U2.1, U2.2, ...) which are connected to the load (M, M1, ..., DC3, ...),
wherein the sequence executed for the purposes of compensation additionally comprises the following steps, wherein:
- the two measured values for the input voltages (U_FN1, U_FN2) on the two converters (U2.1, U2.2, ...), and the two measured values for the powers (I_ln_Con1, I_In_Con2) actually taken up or delivered by the two converters (U2.1, U2.2, ...), are transmitted to the two local controllers (R.1, R.2), and
- each local controller (R.1, R.2) calculates the differential target value (ΔI) for the powers taken up or delivered and, according to this differential target value (ΔI), actuates the converter (U2.1, U2.2, ...) to which said local controller (R.1, R.2) is assigned.

6. The method as claimed in one of the preceding claims,
**characterized in that**
the on-board network comprises a superordinate controller,
wherein the sequence executed for the purposes of compensation additionally comprises the following steps, wherein:
- the two measured values for the input voltages (U_FN1, U_FN2) on the two converters (U2.1, U2.2, ...), and the two measured values for the powers (I_ln_Con1, I_In_Con2) actually taken up or delivered by the two converters (U2.1, U2.2, ...), are transmitted to the superordinate controller, and
- the superordinate controller calculates the differential target value (ΔI) for the powers taken up or delivered (I_ln_Con1, I_In_Con2) and, according to this differential target value (ΔI),actuates the two converters (U2.1, U2.2, ...).

7. The method as claimed in one of the preceding claims,
**characterized in that,**
for the calculation of the differential target value (ΔI), a predefined functional relationship (f), which describes a target power difference as a function of a target voltage difference, is applied to the voltage-difference value (ΔU).

8. The method as claimed in claim 7,
**characterized in that**
the functional relationship (f) is a straight line.

9. The method as claimed in claim 7,
**characterized in that**
the functional relationship (f), at least outside a predefined tolerance range (Δ), increases disproportionately.

10. The method as claimed in one of the preceding claims,
**characterized in that**
the or a load is a motor (M) having two components arranged in parallel,
wherein each of the two converters arranged in parallel (U4.1, U4.2) supplies current to one motor component respectively.

11. The method as claimed in one of the preceding claims,
**characterized in that**
the network comprises
- two identical voltage providers (B1, B2),
- a third voltage provider (FC) and
- a further converter (U6),
wherein, in each case, an identical voltage provider (B1, B2) is assigned to each voltage source, and the third voltage provider (FC) is assigned such that said third voltage provider (FC) is assigned to both voltage sources,
wherein the further converter (U6) comprises
- one input, which is connected to the third voltage provider (FC), and
- two outputs arranged in parallel (U6.1, U6.2),
wherein each output (U6.1, U6.2) of the further converter (U6) is respectively connected in parallel with an identical voltage provider (B.1, B.2), and
wherein different power outputs from the two identical voltage providers (B1, B2) are automatically compensated,
wherein the step for the compensation of the different power outputs comprises the sequence, which is executed at least once, wherein:
- the respective output voltage on each of the two outputs arranged in parallel (U6.1, U6.2) of the further converter (U6) is measured,
- the voltage-difference value (ΔU) is calculated as the difference between the two measured values of the output voltage,
- according to the calculated voltage-difference value, a target value (ΔI) is calculated for the difference between the two electric powers which are respectively delivered by the further converter (U6) at its two outputs (U6.1, U6.2),
- a quantitative measure (I_ln_Con1, I_In_Con2) for the respective electric power which is respectively actually delivered by the further converter (U6) at its two outputs (U6.1, U6.2) is measured, and
- the further converter (U6) is actuated, by the employment of the two measured values for the respective power delivered, with the objective that the difference between the values of the electric power actually delivered at the two outputs (U6.1, U6.2) should be equal to the calculated target value (ΔI).

12. The method as claimed in one of the preceding claims,
**characterized in that,**
if the failure of one voltage source (B1, B2, FC) is detected, the or each of the converters (U2.1, U2.2, ...) connected to said voltage source is connected to the other, or another, voltage source.

13. The method as claimed in claim 12,
**characterized in that**
the failure of one voltage source (B1, B2, FC) is at least automatically detected if a measured value for the input voltage on the, or on a, converter (U2.1, U2.2, ...) which is connected to said voltage source (B1, B2, FC) is lower than a predefined voltage limit.

14. The method as claimed in one of the preceding claims,
**characterized in that**
if a measured value for the electric power taken up or delivered by a first converter exceeds a predefined power limit,
a second converter is additionally connected to the same voltage source as the first converter, at least until such time as the power taken up or delivered by the first converter falls back below the power limit.

15. An underwater vehicle having an electrical network,
wherein the network comprises
- at least two voltage sources (B1, B2) arranged in parallel,
- at least one electrical load (M, M1, ..., DC3, ...) and
- for the or at least one load (M, M1, ..., DC3, ...), at least two converters (U2.1, U2.2, ...) arranged in parallel,
wherein, at least in normal operation, each converter (U2.1, U2.2, ...) for the load (M, M1, ..., DC3, ...) is connected to a voltage source (B1, B2, FC) and is separated from the other, or from each other, voltage source,
wherein each converter (U2.1, U2.2, ...) is configured to convert current from the voltage source (B1, B2, FC) which is connected to the converter (U2.1, U2.2, ...) into current for the load (M, M1, ..., DC3, ...),
wherein the load (M, M1, ..., DC3, ...) is configured to consume current which is supplied by the two converters arranged in parallel (U2.1, U2.2, ...), and
wherein the underwater vehicle is configured to automatically compensate differing power outputs from the two voltage sources,
wherein
a voltage sensor (US.1, US.2) is respectively assigned to each converter, which is configured to measure the input voltage (U_FN1, U_FN2) on said converter (U2.1, U2.2, ...),
additionally, a power sensor (IS.1, IS.2) is respectively assigned to each converter (U2.1, U2.2, ...), which is configured for the measurement of a quantitative measure (I_ln_Con1, I_In_Con2) for the electric power which is actually taken up or delivered by the converter (U2.1, U2.2, ...) in each case, and
the underwater vehicle incorporates a computing unit which is configured, for the compensation of the differing power outputs:
- to calculate a voltage-difference value (ΔU) as the difference between the two measured values of the input voltages (U_FN1, U_FN2),
- according to the calculated voltage difference value (ΔU), to calculate a target value (ΔI) for the difference between the two quantitative measures (I_ln_Con1, I_In_Con2) for the two electric powers respectively taken up by the two converters (U2.1, U2.2, ...) from the voltage source (B1, B2, FC) which is connected thereto, or respectively delivered to the load (M, M1, ..., AC, DC3, ...) by the two converters (U2.1, U2.2, ...), and
- to actuate the two converters (U2.1, U2.2, ...), by the employment of the two measured values for the respective power actually taken up or delivered, with the objective that the difference between the values of the respective electric powers actually taken up or delivered (I_ln_Con1, I_In_Con2) should be equal to the calculated target value (ΔI).

## Revendications

1. Procédé de régulation de la répartition de charge dans un réseau électrique à bord d'un véhicule sous-marin,
le réseau comprenant
- au moins deux sources de tension (B1, B2, FC) disposées en parallèle,
- au moins un consommateur électrique (M, ..., AC, DC3, ...) et,
- pour le consommateur ou au moins un consommateur (M, M1, ..., AC, DC3, ...) , deux convertisseurs (U2.1, U2.2, ...) disposés en parallèle,
au moins en fonctionnement normal chaque convertisseur (U2.1, U2.2, ...) destiné au consommateur (M1, ..., AC, DC3, ...) étant relié à une source de tension (B1, B2, FC) et étant séparé de l'autre ou chaque autre source de tension et
le procédé comprenant les étapes dans lesquelles
- chaque convertisseur (U2.1, U2.2, ...) convertit le courant de la source de tension (B1, B2, FC), reliée à ce convertisseur, en un courant destiné au consommateur (M, M1, ..., AC, DC3, ...) ,
- le consommateur (M, M1, ..., AC, DC3, ...) consomme du courant fourni par les deux convertisseurs (U2.1, U2.2, ...) et
- différentes puissances de sortie des deux sources de tension (B1, B2, FC) sont automatiquement compensées, l'étape de compensation des différentes puissances de sortie comprenant la séquence effectuée au moins une fois dans laquelle
- la tension d'entrée respective (U_FN1, U_FN2) est mesurée au niveau de chacun des deux convertisseurs (U2.1, U2.2, ...) disposés en parallèle,
- une valeur de différence de tensions (ΔU) est calculée comme la différence entre les deux valeurs mesurées des tensions d'entrée (U_FN1, U_FN2),
- en fonction de la valeur de différence de tensions calculée (ΔU), une valeur cible (ΔI) pour la différence entre deux mesures (I_In_Con1, I_In_Con2) est calculée pour les deux puissances électriques que les deux convertisseurs (U2.1, U2.2, ...) absorbent de la source de tension (B1, B2, FC) qui est reliée à eux ou délivrent au consommateur (M, M1, ..., AC, DC3, ...) ,
- une mesure (I_In_Con1, I_In_Con2) est effectuée pour les deux puissances électriques que les deux convertisseurs (U2.1, U2.2, ...) disposés en parallèle absorbent ou délivrent réellement, et
- les deux convertisseurs (U2.1, U2.2, ...) sont commandés à l'aide des deux valeurs mesurées pour la puissance réellement absorbée ou délivrée à chaque fois avec pour but que
la différence entre les valeurs de la puissance électrique (I_In_Con1, I_In_Con2) réellement absorbée ou délivrée soit égale à la valeur cible (ΔI) calculée.

2. Procédé selon la revendication 1,
**caractérisé en ce que**
au moins lorsque la valeur de différence de tensions (ΔU) est située en dehors d'une plage de tolérance spécifiée (Δ) ,
la valeur cible (ΔI) calculée
- est d'autant plus grande que la valeur de différence de tensions est grande, et
- d'autant plus petite que la valeur de différence de tensions est petite.

3. Procédé selon l'une des revendications précédentes,
**caractérisé en ce que**
lorsque la valeur de différence de tensions (ΔU) est située dans une plage de tolérance spécifiée (Δ),
la valeur cible (ΔI) calculée est nulle.

4. Procédé selon l'une des revendications précédentes,
**caractérisé en ce que**
l'intensité de courant respective (I_In_Con1, I_In_Con2) à une entrée reliée à la source de tension (B1, B2, FC) ou à une sortie de ce convertisseur (U2.1, U2.2, ...), reliée au consommateur (M, M1, ..., AC, DC3, ...) est utilisée comme mesure de la puissance électrique qu'un convertisseur (U2.1, U2.2, ...) absorbe de la source de tension reliée (B1, B2, FC) ou délivre au consommateur relié (M, M1, ..., AC, DC3, ...), et
une valeur cible (ΔI) pour la différence entre les deux intensités de courant d'entrée ou intensités de courant de sortie est calculée comme valeur cible de différence.

5. Procédé selon l'une des revendications précédentes,
**caractérisé en ce que**
chacun des deux convertisseurs (U2.1, U2.2, ...) disposés en parallèle et reliés au consommateur (M, M1, ..., DC3, ...) est associé à un régulateur local (R.1, R.2),
la séquence effectuée pour la compensation comprenant également les étapes dans lesquelles
- les deux valeurs mesurées pour les tensions d'entrée (U_FN1, U_FN2) au niveau des deux convertisseurs (U2.1, U2.2, ...) ainsi que les deux valeurs mesurées pour les puissances (I_In_Con1, I_In_Con2) réellement absorbées ou délivrées par les deux convertisseurs (U2.1, U2.2, ...) sont transmises aux deux régulateurs locaux (R.1, R.2) et
- chaque régulateur local (R.1, R.2) calcule la valeur cible de différence (ΔI) pour les puissances absorbées ou délivrées et, en fonction de cette valeur cible de différence (ΔI),commande le convertisseur (U2.1, U2.2, ...) auquel ce régulateur local (R.1, R.2) est associé.

6. Procédé selon l'une des revendications précédentes,
**caractérisé en ce que**
le réseau de bord comprend un régulateur de niveau supérieur,
la séquence effectuée pour la compensation comprenant en outre les étapes dans lesquelles
- les deux valeurs mesurées pour les tensions d'entrée (U_FN1, U_FN2) au niveau des deux convertisseurs (U2.1, U2.2, ...) ainsi que les deux valeurs mesurées pour les puissances (I_In_Con1, I_In_Con2) réellement absorbées ou délivrées par les deux convertisseurs (U2.1, U2.2, ...) sont transmises au régulateur de niveau supérieur et
- le régulateur de niveau supérieur calcule la valeur cible de différence (ΔI) pour les puissances absorbées ou délivrées (I_In_Con1, I_In_Con2) et commande les deux convertisseurs (U2.1, U2.2, ...) en fonction de cette valeur cible de différence (ΔI).

7. Procédé selon l'une des revendications précédentes,
**caractérisé en ce que**
une relation fonctionnelle spécifiée (f), qui décrit une différence de puissance cible en fonction d'une différence de tensions cible, est appliquée à la valeur de différence de tensions (ΔU) pour calculer la valeur cible de différence (ΔI).

8. Procédé selon la revendication 7,
**caractérisé en ce que**
la relation fonctionnelle (f) est une droite.

9. Procédé selon la revendication 7,
**caractérisé en ce que**
la relation fonctionnelle (f) augmente de manière surproportionnelle au moins en dehors d'une plage de tolérance spécifiée (Δ).

10. Procédé selon l'une des revendications précédentes,
**caractérisé en ce que**
le ou un consommateur est un moteur (M) comprenant deux composants disposés en parallèle, chacun des deux convertisseurs (U4.1, U4.2) disposés en parallèle fournissant du courant à un composant de moteur respectif.

11. Procédé selon l'une des revendications précédentes,
**caractérisé en ce que**
le réseau comprend
- deux fournisseurs de tension similaires (B1, B2),
- un troisième fournisseur de tension (FC) et
- un autre convertisseur (U6),
chaque source de tension étant associée à un fournisseur de tension similaire (B1, B2) et au troisième fournisseur de tension (FC) de sorte que le troisième fournisseur de tension (FC) soit associé aux deux sources de tension, l'autre convertisseur (U6) comprenant
- une entrée qui est reliée au troisième fournisseur de tension (FC), et
- deux sorties (U6.1, U6.2) disposées en parallèle, chaque sortie (U6.1, U6.2) de l'autre convertisseur (U6) étant montée en parallèle avec un fournisseur de tension respectif (B.1, B.2) de même type et
différentes puissances de sortie des deux fournisseurs de tension (B1, B2) de même type étant compensées automatiquement,
l'étape de compensation de différentes puissances de sortie comprenant la séquence effectuée au moins une fois dans laquelle
- la tension de sortie respective est mesurée au niveau de chacune des deux sorties parallèles (U6.1, U6.2) de l'autre convertisseur (U6),
- la valeur de différence de tensions (ΔU) est calculée comme la différence entre les deux valeurs mesurées de la tension de sortie,
- une valeur cible (ΔI) pour la différence entre les deux puissances électriques, que l'autre convertisseur (U6) délivre à ses deux sorties (U6.1, U6.2), est calculée en fonction de la valeur de différence de tensions calculée,
- une mesure (I_In_Con1, I_In_Con2) est effectuée pour la puissance électrique respective que l'autre convertisseur (U6) fournit réellement à ses deux sorties (U6.1, U6.2) et
- l'autre convertisseur (U6) est commandé à l'aide des deux valeurs mesurées pour la puissance respectivement délivrée avec pour but que
la différence entre les valeurs de la puissance électrique réellement délivrée aux deux sorties (U6.1, U6.2) soit égale à la valeur cible calculée (ΔI).

12. Procédé selon l'une des revendications précédentes,
**caractérisé en ce que**
lorsqu'une défaillance d'une source de tension (B1, B2, FC) est détectée,
le ou chaque convertisseur (U2.1, U2.2, ...) relié à cette source de tension est relié à l'autre ou une autre source de tension.

13. Procédé selon la revendication 12,
**caractérisé en ce que**
une défaillance d'une source de tension (B1, B2, FC) est détectée automatiquement au moins lorsqu'une valeur mesurée pour la tension d'entrée au niveau du ou d'un convertisseur (U2.1, U2.2, ...) relié à cette source de tension (B1, B2, FC) est inférieure à une limite de tension spécifiée.

14. Procédé selon l'une des revendications précédentes,
**caractérisé en ce que**
lorsqu'une valeur mesurée pour la puissance électrique absorbée ou délivrée par un premier convertisseur dépasse une limite de puissance spécifiée, un deuxième convertisseur est en plus relié à la même source de tension que le premier convertisseur au moins jusqu'à ce que la puissance absorbée ou délivrée par le premier convertisseur soit à nouveau inférieure à la limite de puissance.

15. Véhicule sous-marin comprenant un réseau électrique,
le réseau comprenant
- au moins deux sources de tension (B1, B2) disposées en parallèle,
- au moins un consommateur électrique (M, M1, ... DC3, ...) et,
- pour le consommateur ou au moins un consommateur (M, M1, ..., DC3, ...), au moins deux convertisseurs (U2.1, U2.2, ...) disposés en parallèle,
au moins en fonctionnement normal chaque convertisseur (U2.1, U2.2, ...) destiné au consommateur (M, M1, ..., DC3, ...) étant relié à une source de tension (B1, B2, FC) et étant séparé de l'autre ou chaque autre source de tension,
chaque convertisseur (U2.1, U2.2, ...) étant conçu pour convertir le courant de la source de tension (B1, B2, FC), reliée au convertisseur (U2.1, U2.2, ...), en un courant destiné au consommateur (M, M1, ..., DC3, ...),
le consommateur (M, M1, ..., DC3, ...) étant conçu pour consommer du courant fourni par les deux convertisseurs (U2.1, U2.2, ...) et
le véhicule sous-marin étant conçu pour compenser automatiquement différentes puissances de sortie des deux sources de tension,
chaque convertisseur étant associé à un capteur de tension (US.1, US.2) qui est conçu pour mesurer la tension d'entrée (U_FN1, U_FN2) au niveau de ce convertisseur (U2.1, U2.2, ...),
chaque convertisseur (U2.1, U2.2, ...) étant associé à un capteur de puissance (IS.1, IS.2) qui est conçu pour effectuer une mesure (I_In_Con1, I_In_Con2) de la puissance électrique que l'onduleur (U2.1, U2.2, ...) absorbe ou délivre réellement, et
le véhicule sous-marin comportant une unité informatique conçue, afin de compenser les différentes puissances de sortie,
- pour calculer une valeur de différence de tensions (ΔU) comme différence entre les deux valeurs mesurées des tensions d'entrée (U_FN1, U_FN2),
- pour calculer, en fonction de la valeur de différence de tensions calculée (ΔU), une valeur cible (ΔI) pour la différence entre deux mesures (I_In_Con1, I_In_Con2) pour les deux puissances électriques que les deux convertisseurs (U2.1, U2.2, ...) absorbent de la source de tension (B1, B2, FC) qui est reliée à eux ou délivrent au consommateur (M, M1, ..., AC, DC3, ...),
- pour commander les deux convertisseurs (U2.1, U2.2, ...) à l'aide des deux valeurs mesurées pour les puissances réellement absorbées ou délivrées à chaque fois avec pour but que la différence entre les valeurs des puissances électriques (I_In_Con1, I_In_Con2) réellement absorbées ou délivrées soit égale à la valeur cible (ΔI) calculée.
